# EUROPÄISCHE PATENTSCHRIFT

(11) **EP 3 921 112 B1**
(45) Veröffentlichungstag und Bekanntmachung des Hinweises auf die Patenterteilung: **28.12.2022**
(21) Anmeldenummer: 20704797.8
(22) Anmeldetag: 04.02.2020
(51) Int. Cl.: B23K 37/04, B23Q 3/06, B25B 5/14

(54) **VORRICHTUNG ZUM EINSPANNEN UND AUSRICHTEN VON DÜNNWANDIGEN DOMSEGMENTEN UND DEREN VERWENDUNG**
APPARATUS FOR CLAMPING AND ORIENTING THIN-WALLED DOME SEGMENTS AND USE THEREOF
DISPOSITIF D'ENSERRAGE ET D'ORIENTATION DE SEGMENTS DE DÔME À PAROIS MINCES, ET UTILISATION ASSOCIÉE

(30) Priorität: 04.02.2019 DE 102019102703
(43) Veröffentlichungstag der Anmeldung: 15.12.2021
(73) Patentinhaber: MT Aerospace AG, 86153 Augsburg (DE)
(72) Erfinder: HUBER, Willibald, 85305 Jetzendorf (DE)
(74) Vertreter: Grape & Schwarzensteiner
(86) Internationale Anmeldenummer: PCT/EP2020/052767
(87) Internationale Veröffentlichungsnummer: WO 2020/161143

(56) Entgegenhaltungen:
- CN-A- 103 464 905
- CN-A- 105 728 931
- CN-A- 107 931 825
- SU-A1- 893 487

## Beschreibung

Die vorliegende Erfindung betrifft eine Vorrichtung zum Einspannen und Ausrichten von dünnwandigen Domsegmenten und deren Verwendung.

Vorrichtungen zum Einspannen von hohlprofilierten Werkstücken mit kreisförmigen Querschnitten, zum Beispiel Zylinderschüssen, Kugelschalen, Domen etc., die von außen gefräst, miteinander verschweißt oder sonstwie bearbeitet werden sollen, sind allgemein bekannt. Derartige Vorrichtungen sind unter anderem zur Fertigung von segmentartig ausgebildeten, dünnwandigen und hohlprofilierten Bauteilen, wie etwa Druckbehältern zur Speicherung kryogener Flüssigkeiten, insbesondere von flüssigem Wasserstoff (LH2) oder Sauerstoff (LOX), vorgesehen. Solche Druckbehälter bzw. Tanks können in allen automotiven Bereichen, wie der Luftund Raumfahrt, im Schiffs- und Bootsbau und insbesondere in der Automobilindustrie, Anwendung finden. Ein großes Problem bei der Fertigung von Domen bzw. Domringen, also Domen mit einer Polöffnung, solcher Druckbehälter resultiert aus deren dreidimensionalen Formen, deren außerordentlich großen Abmessungen mit einem Durchmesser von bis ca. 6,0 m oder mehr und einer Länge von bis zu 25 m sowie im Verhältnis dazu extrem geringen Wandstärken mit einer Wanddicke im Bereich von ca. 3,3 mm bis etwa 15 bis 20 mm. Die Dome bzw. Domringe werden dabei üblicherweise durch ein aufeinanderfolgendes Zusammensetzen und Fügen von einzelnen Domsegmenten gebildet, was in der Praxis oftmals zu erheblichen Schwierigkeiten führt. Zum einen ergeben sich bei einer solchen Herstellung vielfach Maßungenauigkeiten und Toleranzabweichungen der Dome bzw. Domringe in Form, Abmessung und Toleranz, welche erhebliche Nacharbeiten erfordern oder im ungünstigsten Falle sogar zu vollständiger Unbrauchbarkeit führen können. Zum anderen gestaltet sich eine solche Herstellung als ausgesprochen aufwendig, zeitintensiv und damit einhergehend sehr kostenintensiv.

In der CN 103 464 905 A ist darüber hinaus eine Vorrichtung zum Einspannen und Ausrichten von dünnwandigen Domsegmenten offenbart, die eine auf oder an einer Basis abgestützte Tragstruktur oder dergleichen Rahmengestell und wenigstens zwei, d.h. hier sechs, von der Tragstruktur aufgenommene und gehaltene, radial bewegbare und mittels Vakuum wirkende Spanneinrichtungen zum Aufnehmen und Fixieren von jeweils einem mit einem oder mehreren weiteren dünnwandigen Domsegment/en zu einem Dom oder Domring zu bildenden und zu fügenden, dünnwandigen Domsegment und einen an der Tragstruktur angeordneten Spannarm umfasst.

Die CN 105 728 931 A beschreibt eine Vorrichtung zum Einspannen und Ausrichten von vier bis sechs dünnwandigen Domsegmenten mit einer drehbaren Basis und drei auf der Basis radial verfahrbar angeordnete Tragkonsolen unterschiedlicher Größe. Entsprechend der jeweiligen Größe der Domsegmente bzw. der daraus herzustellenden Dome lassen sich zwei der drei Tragkonsolen während des Verschweißens, bevorzugt mittels Rührreib (FSW)-Schweißen, der Domsegmente in die Mitte der Basis verfahren. Somit sollen sich Dome unterschiedlicher Größe auf einer einzigen Vorrichtung herstellen lassen.

Gleiches gilt für die SU 893 487 A1. Zur Herstellung von Domen für Behälter, insbesondere zum Schweißen und Zusammenbauen sehr großer Komponenten, unterschiedlicher Größe, die in der chemischen Industrie und in der Erdölindustrie Verwendung finden, ist eine Vorrichtung vorgeschlagen, die eine vertikal verschiebbare Hebesäule, einen an der Hebesäule montierten Tragring mit Abstützelementen und mehrere auf Radialführungen verfahrbaren Stützelementen umfasst.

Die CN 107 931 825 A offenbart schließlich eine Vorrichtung zum Einspannen und Ausrichten von dünnwandigen Domsegmenten mit axial verschiebbar ausgebildeten Spannelementen.

Der vorliegenden Erfindung liegt daher die Aufgabe zugrunde, eine Vorrichtung zum Einspannen und Ausrichten von dünnwandigen Domsegmenten zur Verfügung zu stellen, welche eine Herstellung von in Form, Abmessung und Toleranz hochpräzisen Domen bzw. Domringen und zugleich eine ausgesprochen schnelle, vollständig automatisierbare sowie damit besonders kostengünstige Herstellung von Domen bzw. Domringen insgesamt ermöglicht, und deren Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Vorrichtung zum Einspannen und Ausrichten von dünnwandigen Domsegmenten, umfassend eine auf oder an einer Basis abgestützte Tragstruktur oder dergleichen Rahmengestell und wenigstens zwei, insbesondere acht, von der Tragstruktur aufgenommene und gehaltene Spanneinrichtungen zum Aufnehmen, Fixieren und Einspannen von jeweils einem mit einem oder mehreren weiteren dünnwandigen Domsegment/en zu einem Dom oder Domring zu bildenden und zu fügenden, dünnwandigen Domsegment, wobei die wenigstens zwei, insbesondere acht, Spanneinrichtungen jeweils ein mit der Innenseite des Domsegmentes in Form und Abmessung korrespondierendes Spannelement und einen verschwenkbaren, insbesondere auf- und zuklappbaren, Spannarm, von welchem das Domsegment aufnehmbar und zwischen welchen das Domsegment einlegbar ist, umfassen, in einer gemeinsamen Ebene um eine gemeinsame Längsachse angeordnet sind und in der gemeinsamen Ebene relativ zu der gemeinsamen Längsachse und/oder relativ zu den weiteren der wenigstens zwei, insbesondere acht, Spanneinrichtungen radial von außen nach innen, und umgekehrt, bewegbar sind, wird eine Herstellung von Domen bzw. Domringen erreicht, die in Form, Abmessung und Toleranz hochpräzise ist. Versetzungen, Fertigungsungenauigkeiten und Toleranzabweichungen sowie sonstige daraus resultierende Qualitätsmängel lassen sich dadurch sicher vermeiden. Erhebliche Nacharbeiten sind folglich nicht erforderlich. Die Ausschussquote geht gegen Null. Dome bzw. Domringe, die in der erfindungsgemäß ausgebildeten Vorrichtung gegebenenfalls zur weitergehenden Bearbeitung eingespannt und ausgerichtet wurden, besitzen vielmehr eine ausgesprochen hohe Montage- und Fertigungsgenauigkeit. Darüber hinaus gestaltet sich eine solche Herstellung als ausgesprochen unaufwendig, schnell, ist vollständig automatisierbar, besitzt nicht zuletzt hieraus resultierend sehr hohe Taktzeiten und zeichnet sich durch eine besonders kostengünstige Handhabung insgesamt aus. Im Ergebnis werden zugleich die Qualität der hergestellten Dome bzw. Domringe wesentlich gesteigert und die Montagezeit der Dome bzw. Domringe erheblich reduziert.

Wesentliche Vorteile, die sich mit der erfindungsgemäßen Vorrichtung mit wenigstens zwei, insbesondere acht, Spanneinrichtungen erhalten lassen, sind weiter: Mit der erfindungsgemäßen Vorrichtung lassen sich radiale Kräfte und/oder Momente von zum Teil bis 10 t und mehr, die bei einer Bearbeitung der Domsegmente, zum Beispiel beim Rührreib (FSW)-Schweißen, auftreten, über deren gesamten Umfang gleichmäßig und/oder gleichbleibend verteilen. Mit den Spanneinrichtungen ist eine stufenlose Verfahrbarkeit ermöglicht. Es lassen sich somit hohe Schrumpfspannungen, die zum Beispiel während des Reibrühr (FSW)-Schweißens in einem Bauteil auftreten, kontrolliert, durch Verschiebungen der Spanneinrichtungen reduzieren bzw., wenn erforderlich, abbauen. Darüber hinaus lässt sich durch die Verfahrbarkeit der Spanneinrichtungen der Bauteildurchmesser stufenlos anpassen. Mit den erfindungsgemäßen Spanneinrichtungen lassen sich darüber hinaus radiale Kräfte und/oder Momente von zum Teil bis 100 t und mehr erzeugen. So kann eine Aufweitung gewünscht oder sogar notwendig sein, um beispielsweise einen bei der Bearbeitung der Domsegmente, etwa beim Rührreib (FSW)-Schweißen, auftretenden radialen Schrumpf auszugleichen und die Abmessungen/Geometrien der Domsegmente vor und nach der Bearbeitung konstant zu halten. Des Weiteren wird über den/die komplette/n Schweißnaht-Bereich bzw. -Länge eine konkrete Bauteilauflage erzeugt, wodurch ein fehlerfreier stabiler automatisierter Fertigungsprozess ermöglicht ist. Zusätzlich wird durch die konkrete Bauteilauflage der Wärmeeintrag in der Schweißnaht reduziert bzw. die Wärme gleichmäßig und beschleunigt abgeführt, was höhere Schweißvorschübe ermöglicht und zu besseren physikalischen Schweißnahteigenschaften führt. Darüber hinaus findet durch die radiale Aufweitung ein Toleranzausgleich zwischen den einzelnen Spanneinrichtungen statt, da zwangsweise aus den großen Bauteil-Geometrien und den hohen Bauteilspannkräften Toleranzabweichungen entstehen, die etwa beim Reibrühr (FSW)-Schweißen aus den vorgenannten Gründen möglichst zu kompensieren sind.

Vorteilhafte konstruktive Einzelheiten der erfindungsgemäßen Vorrichtung sind in den Ansprüchen 2 bis 24 beschrieben.

Von ganz besonderem Interesse sind die Maßnahme des Anspruchs 2, wonach die Längsachse der Tragstruktur zu der Basis, beispielsweise dem Fundament, dem (Fundament-)Boden eines Gebäudes oder einer sonstigen Grundkonsole, auf bzw. an welcher die Tragstruktur abgestützt ist, senkrecht oder im Wesentlichen senkrecht verläuft bzw. dazu verlaufend ausgerichtet ist. Im Wesentlichen senkrecht soll in diesem Zusammenhang bedeuten, dass sich die Längsachse unter Umständen aufgrund von Toleranzen auch nicht ganz genau senkrecht, sondern davon geringfügig abweichend erstrecken kann. Die erfindungsgemäße Vorrichtung ermöglicht mithin, die Domsegmente senkrecht zur Tragstruktur und/oder Basis zu "beladen", also auf- bzw. einzulegen, einzuspannen, (fein-) zubearbeiten und zueinander auszurichten, zu bearbeiten und letztlich miteinander zu fügen. Die erfindungsgemäße Vorrichtung nimmt quasi eine vertikal nach oben ("offene" bzw. "geöffnete") gerichtete Stellung ein. Sämtliche dieser Vorgänge erfolgen aufgrund der konzentrischen Anordnung um die Längsachse kraft- und momentenfrei. Beaufschlagungen durch eigene Gewichtskräfte der Vorrichtung und/oder der Domsegmente, die eben zu Querkräften und Momenten führen, finden nicht statt. Im Gegenteil lassen sich mittels der erfindungsgemäßen Vorrichtung sogar die eigenen Gewichtskräfte infolge der Erdanziehung zusätzlich zum/beim Einspannen, Ausrichten und Fügen der Domsegmente ausnutzen. Die erfindungsgemäße Vorrichtung zeichnet sich gegenüber dem Stand der Technik durch eine Vielzahl, zudem herausragender Vorteile aus. Dies gilt insbesondere im Hinblick auf eine besonders einfache, kompakte und zuverlässige Bauweise zum einen und auf eine ausgesprochen hohe Montage- bzw. Fertigungsgenauigkeit zum anderen.

So liegt es im Rahmen der Erfindung, die Tragstruktur oder dergleichen Rahmengestell nach Anspruch 3 gegenüber der Basis, insbesondere um die gemeinsame Längsachse, relativ drehbar auszubilden und/oder anzuordnen.

Von besonders großer Bedeutung sind die Maßnahmen des Anspruchs 4. Danach sind die wenigstens zwei, insbesondere acht, Spanneinrichtungen derart ausgebildet, dass die wenigstens zwei, insbesondere acht, Domsegmente in der gemeinsamen Ebene relativ aus einer Einlege- und Spannposition in eine Bearbeitungsposition auf die gemeinsame Längsachse zu sowie aus der Bearbeitungsposition in die Einlege- und Spannposition von der gemeinsamen Längsachse weg in radialer Richtung bewegbar sind, und umgekehrt.

In vorteilhafter Weise umfasst die Spanneinrichtung dabei nach Anspruch 5 eine Antriebseinrichtung zur Verschiebung oder Bewegung der Spanneinrichtung in oder parallel zu oder im Wesentlichen in oder parallel zu der gemeinsamen Ebene relativ gegenüber der Tragstruktur.

Weiterhin liegt es im Rahmen der Erfindung, dass die Spanneinrichtung nach Anspruch 6 mindestens einen Zentrierdorn und/oder mindestens ein Anschlagelement umfasst, das/der zur Positionierung des Domsegmentes in der Spanneinrichtung, also zwischen Spannelement und Spannarm vorgesehen ist und mit entsprechenden Ausnehmungen, Ausschnitten oder dergleichen Hinterschneidungen an dem Domsegment zusammenwirkt, d.h. in die Ausnehmungen bzw. Ausschnitte eingreift bzw. die Hinterschneidungen hintergreift. Der mindestens eine Zentrierdorn und/oder das mindestens eine Anschlagelement ist/sind in diesem Zusammenhang bevorzugt ausfahrbar, teleskopierbar, herausklappbar oder dergleichen bewegbar ausgebildet.

Zusätzlich weist die Spanneinrichtung nach Anspruch 7 wenigstens ein Verriegelungselement, zum Beispiel einen Bolzen oder dergleichen Zylinder, auf, um Spanneinrichtung, insbesondere Spannelement und Spannarm miteinander, im bzw. während des Betrieb/s wirksam zu verriegeln. Die Verriegelung ist vorzugsweise lösbar ausgestaltet. In besonders vorteilhafter Ausgestaltung erfolgt die Verriegelung in diesem Zusammenhang spielfrei. Das/Die Verriegelungselement/e ist/sind dabei bevorzugt ausfahrbar, teleskopierbar, herausklappbar oder dergleichen bewegbar ausgebildet.

Darüber hinaus ist die Spanneinrichtung nach Anspruch 8 mit Spannbacken, welche im längsseitigen Randbereich bzw. längs des Randes der Spanneinrichtung angeordnet sind, und mit einem Schlauchspannelement, welches die Spannbacken mit Druck beaufschlagt, versehen. Über die Spannbacken ist das Domsegment bei Betätigung des bzw. Druckaufbau in dem Schlauchspannelement/es in der Spanneinrichtung zwischen dem Spannelement und dem Spannarm lösbar einspannbar, d.h. fixierbar und gehalten.

Um eine Verschiebung des Domsegmentes in der Spanneinrichtung wirksam zu vermeiden, umfasst die Spanneinrichtung entsprechend den Merkmalen nach Anspruch 9 Seitenfixierungselemente, die mit entsprechenden Ausnehmungen, Ausschnitten oder dergleichen Hinterschneidungen an dem Domsegment zusammenwirken. Die Seitenfixierelemente sind in diesem Zusammenhang bevorzugt ausfahrbar, teleskopierbar, herausklappbar oder dergleichen bewegbar ausgebildet.

Von ganz besonderen Interesse sind die Maßnahmen des Anspruchs 10, wonach die Spanneinrichtung derart ausgebildet ist, dass das Domsegment teilweise, insbesondere im längsseitigen Randbereich der Spanneinrichtung, radial von innen nach außen mit Druck beaufschlagbar ist.

Vorzugsweise umfasst die Spanneinrichtung in diesem Zusammenhang nach Anspruch 11 eine Wurzelstütze, welche im längsseitigen Randbereich der Spanneinrichtung angeordnet ist.

Darüber hinaus umfasst die Spanneinrichtung gemäß Anspruch 12 eine Wurzelstütze, durch welche das Domsegment in einem Winkel von etwa 15° bis etwa 75°, insbesondere in einem Winkel von etwa 30° bis etwa 60°, vorzugsweise in einem Winkel von etwa 45°, zu der gemeinsamen Längsachse radial von innen nach außen mit Druck beaufschlagbar ist.

Entsprechend den Merkmalen des Anspruchs 13 weist die Spanneinrichtung in ganz bevorzugter Weise ein Spannbetätigungselement auf, das radial von außen nach innen, und umgekehrt, verschiebbar ist und sich an der Spanneinrichtung abstützt.

Das Spannbetätigungselement der Spanneinrichtung ist nach Anspruch 14 der Wurzelstütze zugeordnet ist und kann die Wurzelstütze durch Verschiebung mit Druck gegen das Domsegment beaufschlagen.

Des Weiteren liegt es im Rahmen der Erfindung, dass das Spannbetätigungselement der Spanneinrichtung in vorteilhafter Weise nach Anspruch 15 im Wesentlichen keilförmig, insbesondere als Keil, ausgebildet ist. Ein besonderer Vorteil der Keil- bzw. Schrägflächen besteht in einem weitaus größeren Hub des Spannbetätigungselementes, welcher wiederum zu einer höheren Kraftaufbringung bei gleichbleibenden Genauigkeiten führt, unter gleichzeitigem Erhalt einer optimalen Raumaufteilung, Raumausnutzung und damit Platzeinsparung.

In vorteilhafter Weise kann das Spannbetätigungselement der Spanneinrichtung das Spannelement nach Anspruch 16 durch Verschiebung in einem Winkel, insbesondere in einem Winkel von etwa 15° bis etwa 75°, insbesondere in einem Winkel von etwa 30° bis etwa 60°, und vorzugsweise in einem Winkel von etwa 45°, zu der gemeinsamen Längsachse und radial von außen nach innen mit Druck beaufschlagen, und umgekehrt.

Zweckmäßigerweise ist das Spannbetätigungselement der Spanneinrichtung nach Anspruch 17 an einem Stützelement der Spanneinrichtung radial nach innen abstützbar. Das Stützelement dient als Führungselement bzw. Gegenlager für das Spannbetätigungselement.

Von sehr großer Bedeutung für eine zusätzliche Vereinfachung der Bauweise und eine weitergehende Erhöhung der Montage- bzw. Fertigungsgenauigkeit der erfindungsgemäßen Vorrichtung sind die Maßnahmen des Anspruchs 18. Danach umfasst die Spanneinrichtung ein, insbesondere aus einem hochwarmfesten Material ausgebildetes, Wurzelstützelement oder dergleichen -blech, welches der Wurzelstütze zugeordnet ist. Damit lassen sich eine ganze Reihe von Vorteilen erhalten: So sind die wenigstens zwei Spanneinrichtungen im Spannzustand zueinander geringfügig, d.h. in der Praxis durch Spalte von bis zu ungefähr 10 mm, insbesondere von etwa 1,0 bis 1,5 mm, beabstandet. Das Wurzelstützelement oder dergleichen -blech überbrückt diese Spalte und bildet somit eine durchgehende, kontinuierliche und glatte Spannfläche im Bereich einer gemeinsamen Trennebene von zwei, einander benachbarten Domsegmenten. Die zwei Domsegmente, die nach dem Einspannen und Ausrichten von außen, beispielsweise durch Fräsen oder Schweißen, insbesondere Rührreib (FSW)-Schweißen, bearbeitet werden, können sich demzufolge im Bereich der gemeinsamen Trennebene nicht verformen. Vornehmlich aber wird durch das Wurzelstützelement oder dergleichen -blech vermieden, dass das beispielsweise beim Rührreib (FSW)-Schweißen auftretende plastifizierte Material durch die extrem hohen Expansionskräfte der Spannvorrichtung von bis zu 200 t und die von einem Werkzeug einer Rührreib (FSW)-Schweißeinrichtung erzeugten Anpresskräfte von ca. 6 t durch die Spalte zwischen den Spanneinrichtungen gedrückt wird. Eine Beschädigung der Spanneinrichtungen durch die hohen Temperaturen im Schweißbereich ist sicher ausgeschlossen.

In diesem Zusammenhang ist erfindungsgemäß vorgesehen, dass das Wurzelstützelement oder dergleichen -blech nach Anspruch 19 von einer in der Wurzelstütze vorgesehenen Nut oder Ausnehmung aufnehmbar ist.

Entsprechend Anspruch 20 ist/sind die Tragstruktur oder dergleichen Rahmengestell und/oder die Spanneinrichtung und/oder der Spannarm und/oder die Zentrierdorne und/oder Anschlagelemente und/oder das/die Verriegelungselement/e und/oder Seitenfixierungselemente und/oder das Spannbetätigungselement und/oder Anschläge oder dergleichen Absteckungselemente elektromotorisch, mechanisch, pneumatisch oder hydraulisch betätigbar und/oder klappbar und/oder verschiebbar und/oder bewegbar oder dergleichen antreibbar. In alternativer oder kumulativer Weise können die vorstehend genannten Bauteile unabhängig voneinander und/ oder einzeln oder sämtlich aufeinander abgestimmt synchronisierbar sein, und zwar insbesondere auch durch eine Steuerung und/ oder Regelung.

Zur Verbesserung der Gleiteigenschaften und zur Reibungs- sowie Verschleißminderung kann/können das Spannelement und/oder der Spannarm und/oder das Spannbetätigungselement und/oder das Stützelement nach Anspruch 21 in ganz bevorzugter Weise mit einer Beschichtung aus Kunststoff, insbesondere aus Polytetrafluorethylen (PTFE), Polyoximethylen (POM) oder Polyimid (PI), mit oder ohne Aramid-, Glas-, Kohlen-, Nylon-, Polyethylen- und/oder Polyesterfaserverstärkung, und/oder einer Kombination daraus versehen sein.

Sämtliche beweglichen und/oder relativ zueinander beweglichen Bauteile, wie die Tragstruktur und/oder das Spannelement und/ oder der Spannarm und/oder das Spannbetätigungselement und/oder das Stützelement, kann/können nach Anspruch 22 vorzugsweise durch Wälzlager, insbesondere Kugel- oder Rollenlager, und/oder sonstige Linearführungen abgestützt und/oder geführt sein. Auf diese Weise lassen sich ebenfalls einerseits die Gleiteigenschaften verbessern und andererseits reibungsbedingte Verschleißerscheinungen erheblich vermindern.

Vorteilhafterweise ist der Spanneinrichtung nach Anspruch 23 der Spanneinrichtung wenigstens eine Einrichtung zur Bearbeitung und/oder Fügung und/oder Materialprüfung mindestens eines Teils der Domsegmente zugeordnet. Demnach ist die Spanneinrichtung besonders vielseitig einsetzbar.

Dabei liegt es bevorzugt im Rahmen der Erfindung, die wenigstens eine Einrichtung zur Bearbeitung und/oder Fügung und/ oder Materialprüfung des mindestens einen Teils der Domsegmente nach Anspruch 24 als Fräseinrichtung, Schneide- bzw. Schleif-, Dreh- oder dergleichen flächen- und spanbearbeitende Einrichtung, Schweiß-, Löt- oder Klebeeinrichtung und/oder güte- und materialprüfende Einrichtung, insbesondere zerstörungsfreie Prüfungs- bzw. NDI (Non-Destructive Inspection)-Einrichtung, auszubilden. Ganz bevorzugt für die erfindungsgemäße Vorrichtung eignet sich dabei eine Schweißeinrichtung auf Basis von Rührreib (FSW)-Schweißen.

Diese Aufgabe wird schließlich noch in verwendungsmäßiger Hinsicht durch die Merkmale der Ansprüche 25 oder 26 gelöst.

Nach Anspruch 25 ist die erfindungsgemäße Vorrichtung vorzugsweise zum Einspannen und Ausrichten von dünnwandigen Domsegmenten vorgesehen. Alternativ oder kumulativ dazu kann die erfindungsgemäße Vorrichtung dem Bearbeiten und/oder Fügen und/oder Materialprüfen, insbesondere Fräsen, Schneiden bzw. Schleifen, Drehen oder dergleichen Flächenbearbeitung, Verschweißen, vorzugsweise Rührreib (FSW)-, Verlöten oder Verkleben und/oder zum zerstörungsfreien Prüfen bzw. NDI (Non-Destructive Inspection)-Prüfen von dünnwandigen Domsegmenten dienen.

Schließlich liegt es noch im Rahmen der Erfindung, die erfindungsgemäße Vorrichtung nach Anspruch 26 zum Herstellen von rotationssymmetrischen und/oder nicht rotationssymmetrischen schalenförmigen, insbesondere halbkugelförmig, kugelkappenförmig, kalottenförmig, ellipsoidkalottenförmig, konisch, elliptisch, in Cassini-Form, Halb-Torus-förmig oder mit dergleichen anderen Querschnittsformen ausgestalteten Bauteilen zu verwenden. Ganz besonders eignet sich die erfindungsgemäße Vorrichtung dabei zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

Weitere Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine perspektivische Ansicht einer Ausführungsform eines aus acht dünnwandigen Domsegmenten gefertigten Doms bzw. Domringes,
- Fig. 2A und 2B: eine seitliche Querschnittsansicht und eine Draufsicht auf eine Ausführungsform einer erfindungsgemäß ausgebildeten Vorrichtung zum Einspannen und Ausrichten von dünnwandigen Domsegmenten mit acht erfindungsgemäßen Spanneinrichtungen, in einer Einlegeund Spannposition, in geöffnetem Zustand,
- Fig. 3A und 3B: teilweise abgebrochene perspektivische Ansichten von Teilen der Ausführungsform der erfindungsgemäß ausgebildeten Vorrichtung nach den Fig. 2A und 2B, in vergrößerter Darstellung,
- Fig. 4A und 4B: eine seitliche Querschnittsansicht und eine Draufsicht auf die Ausführungsform der erfindungsgemäß ausgebildeten Vorrichtung zum Einspannen und Ausrichten von dünnwandigen Domsegmenten nach den Fig. 2A und 2B mit den acht erfindungsgemäßen Spanneinrichtungen, in einer Einlege- und Spannposition, in geschlossenem Zustand,
- Fig. 5: eine teilweise abgebrochene Querschnittsansicht durch die Ausführungsform der erfindungsgemäß ausgebildeten Vorrichtung nach den Fig. 4A und 4B entsprechend Ausschnitt V in der Fig. 4A, in vergrößerter Darstellung,
- Fig. 6: eine teilweise abgebrochene, perspektivische Schnittansicht der Ausführungsform der erfindungsgemäß ausgebildeten Spanneinrichtung entsprechend Ausschnitt VI in der Fig. 5, in vergrößerter Darstellung,
- Fig. 7: eine teilweise abgebrochene perspektivische Ansicht von Teilen der Ausführungsform der erfindungsgemäß ausgebildeten Vorrichtung nach den Fig. 2A und 2B, in vergrößerter Darstellung,
- Fig. 8A und 8B: eine seitliche Querschnittsansicht und eine Draufsicht auf die Ausführungsform der erfindungsgemäß ausgebildeten Vorrichtung zum Einspannen und Ausrichten von dünnwandigen Domsegmenten nach den Fig. 2A und 2B mit den acht erfindungsgemäßen Spanneinrichtungen, in einer Frässtellung als einer ersten Bearbeitungsposition, im Spannzustand,
- Fig. 9: eine teilweise abgebrochene Schnittansicht der Ausführungsform der erfindungsgemäß ausgebildeten Spanneinrichtung entsprechend Ausschnitt IX in der Fig. 8A, in vergrößerter Darstellung,
- Fig. 10: eine teilweise abgebrochene Schnittansicht der Ausführungsform der erfindungsgemäß ausgebildeten Spanneinrichtung entsprechend Ausschnitt X in der Fig. 9, in nochmals vergrößerter Darstellung,
- Fig. 11A und 11B: eine seitliche Querschnittsansicht und eine Draufsicht auf die Ausführungsform der erfindungsgemäß ausgebildeten Vorrichtung zum Einspannen und Ausrichten von dünnwandigen Domsegmenten nach den Fig. 2A und 2B mit den acht erfindungsgemäßen Spanneinrichtungen, in einer Schweißstellung als einer weiteren Bearbeitungsposition, in einem weiteren Spannzustand,
- Fig. 12: eine teilweise abgebrochene Schnittansicht der Ausführungsform der erfindungsgemäß ausgebildeten Spanneinrichtung entsprechend Ausschnitt XII in der Fig. 11A, in vergrößerter Darstellung,
- Fig. 13: eine teilweise abgebrochene Schnittansicht der Ausführungsform der erfindungsgemäß ausgebildeten Vorrichtung Spanneinrichtung entsprechend Ausschnitt XIII in der Fig. 12, in nochmals vergrößerter Darstellung, und
- Fig. 14: eine Ausführungsform einer erfindungsgemäß ausgebildeten Vorrichtung zum Einspannen und Ausrichten von dünnwandigen Domsegmenten mit acht erfindungsgemäßen Spanneinrichtungen und einer Ausführungsform eines Fräs- sowie Schweißportals.

Bei der nachfolgenden Beschreibung eines Ausführungsbeispiels der erfindungsgemäßen Vorrichtung 10 zum Einspannen und Ausrichten von dünnwandigen Domsegmenten 12 sind einander entsprechende, gleiche Bauteile jeweils mit identischen Bezugsziffern versehen.

Die Vorrichtung 10 nach der Erfindung ist zum Einspannen und Ausrichten von dünnwandigen Domsegmenten 12 vorgesehen. Die Vorrichtung 10 zeichnet sich besonders durch ein in Umfangsrichtung spannungsfreies Einspannen aus, da die Spannung am bzw. über den Umfang der Domsegmente 12 gleich ist bzw. gleich verteilt wird.

Die erfindungsgemäße Vorrichtung 10 eignet sich insbesondere zum Bearbeiten und/oder Fügen und/oder Materialprüfen, insbesondere Fräsen, Schneiden bzw. Schleifen, Drehen oder dergleichen Flächenbearbeitung, Verschweißen, vorzugsweise Rührreib (FSW)-Schweißen, Verlöten oder Verkleben und/oder zum zerstörungsfreien Prüfen bzw. NDI (Non-Destructive Inspection)-Prüfen von dünnwandigen Domsegmenten 12.

Darüber hinaus findet die erfindungsgemäße Vorrichtung 10 vorzugsweise zum Herstellen von rotationssymmetrischen und/oder nicht rotationssymmetrischen schalenförmigen, insbesondere halbkugelförmig, kugelkappenförmig, kalottenförmig, ellipsoidkalottenförmig, konisch, elliptisch, in Cassini-Form, Halb-Torus-förmig oder mit dergleichen anderen Querschnittsformen ausgestalteten Bauteilen Verwendung.

In ganz bevorzugter Weise dient die erfindungsgemäße Vorrichtung 10 dem Herstellen von Domen 14 oder Domringen, d.h. Domen 14 mit einer Polöffnung 16, für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

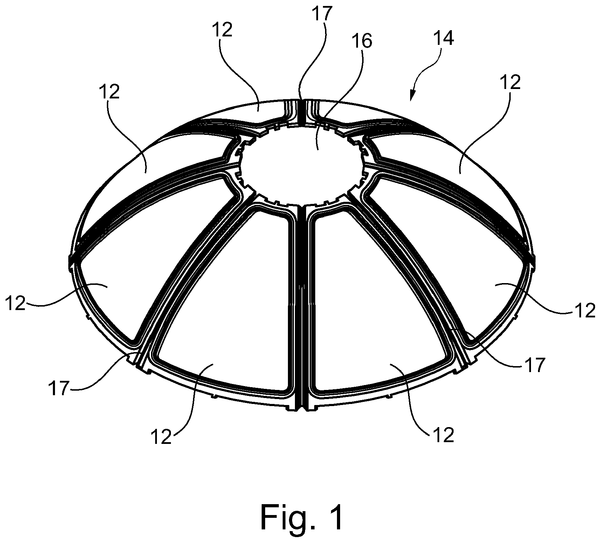

Ein solcher Dom 14 bzw. Domring ist in der Fig. 1 beispielhaft dargestellt. Es handelt sich dabei um einen Dom 14 eines Boostergehäuses bzw. Treibstofftanks der Oberstufe der Ariane 6. Der Treibstofftank ist aus einer Vielzahl von dünnwandigen Domsegmenten 12 zusammengesetzt, die einander in Form und Abmessung übereinstimmen. Entsprechend der Fig. 1 ist der Dom 14 bzw. der eine Polöffnung 16 aufweisende Domring aus insgesamt acht identischen Domsegmenten 12 gebildet, d.h. zusammengesetzt und gefügt. Die einzelnen einander benachbarten Domsegmente 12 sind jeweils miteinander verschweißt. Sämtliche dieser Schweißnähte 17 können einfach, schnell und präzisionsgenau mittels der erfindungsgemäßen Vorrichtung 10 erzeugt werden.

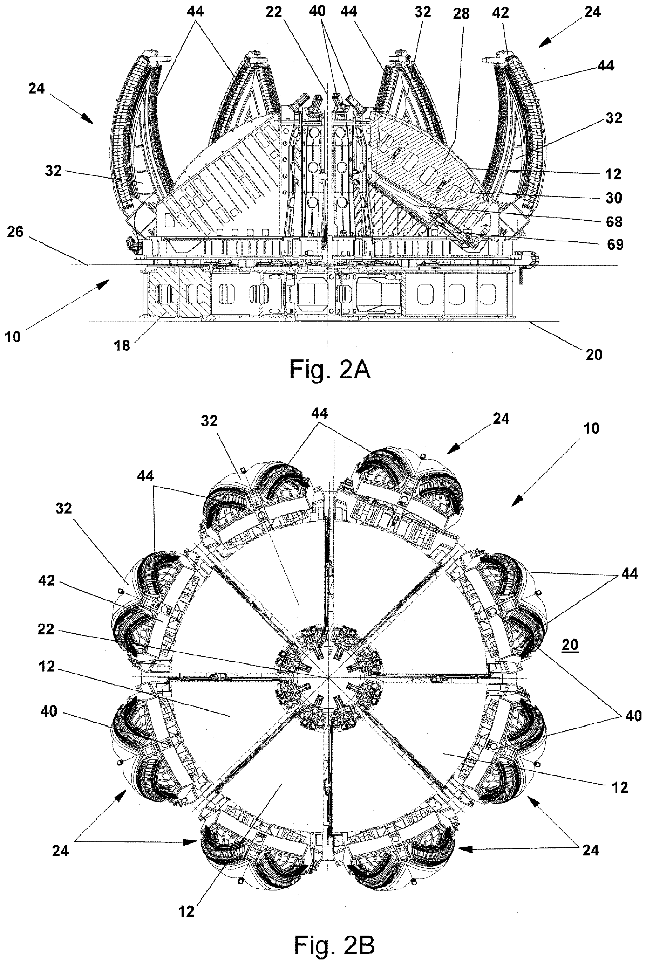

In den Fig. 2 bis 14 ist eine Ausführungsform der erfindungsgemäßen Vorrichtung 10 zum Einspannen und Ausrichten der dünnwandigen Bauteile in Form von Domsegmenten 12 gezeigt.

Die erfindungsgemäße Vorrichtung 10 umfasst eine Tragstruktur 18 oder dergleichen Rahmengestell. Bei der in den Fig. 2 bis 14 gezeigten Ausführungsform ist die Tragstruktur 18 im Wesentlichen rund bzw. kreisförmig ausgebildet. Beispielhaft ist die Tragstruktur 18 als Kreisplatte ausgebildet.

Die Tragstruktur 18 ist auf oder an einer Basis 20 abgestützt. Bei der Basis 20 handelt es sich um ein Fundament, einen (Fundament-)Boden eines Gebäudes oder eine sonstige Grundkonsole.

Die Tragstruktur 18 oder dergleichen Rahmengestell ist gegenüber der Basis 20 relativ drehbar ausgebildet und/oder angeordnet. Ohne im Einzelnen dargestellt zu sein, ist der Tragstruktur 18 demnach eine Dreheinrichtung zugeordnet, die eine Antriebseinrichtung mit wenigstens einem Antriebsmotor oder -aggregat, der/das vorzugsweise statisch an/auf der Basis 20 angeordnet ist, und ein mit dem Antriebsmotor zusammenwirkendes Antriebselement, das vorzugsweise der Tragstruktur 18 zugeordnet ist, umfasst. Das Antriebselement der Antriebseinrichtung ist beispielsweise an dem Umfang der Tragstruktur 18 vorgesehen und in Form einer Profilierung, insbesondere einer Verzahnung, Zähnen oder einem Zahnradkranz, ausgebildet.

Die Tragstruktur 18 ist dabei insbesondere um die Längsachse 22 der Tragstruktur 18 drehbar. Bei der Tragstruktur 18 handelt es sich mithin quasi um einen Drehtisch bzw. drehbaren Maschinentisch.

Wie insbesondere die Fig. 2A, 4A, 8A, 11A und 14 zeigen, erstreckt sich die Längsachse 22 der Tragstruktur 18 zu der Basis 20, beispielsweise dem Fundament, dem (Fundament-)Boden eines Gebäudes oder einer sonstigen Grundkonsole, auf bzw. an welcher die Tragstruktur 18 abgestützt ist, senkrecht oder im Wesentlichen senkrecht, d.h. unter Umständen aufgrund von Toleranzen auch nicht genau senkrecht, sondern davon geringfügig abweichend, bzw. ist dazu verlaufend ausgerichtet. Demnach ist in den die Fig. 2A, 4A, 8A, 11A und 14 jeweils die Stellung der erfindungsgemäßen Vorrichtung 10 dargestellt, in welcher die Domsegmente 12 "beladen", also aufgelegt, eingespannt, (fein-)bearbeitet und zueinander ausgerichtet, bearbeitet und letztlich miteinander gefügt werden. Die Vorrichtung 10 nimmt quasi eine vertikal nach oben ("offene" bzw. "geöffnete") gerichtete Stellung ein. Sämtliche dieser Vorgänge erfolgen aufgrund der konzentrischen Anordnung um die Längsachse 22 kraft- und momentenfrei. Beaufschlagungen durch eigene Gewichtskräfte der Vorrichtung 10 und/oder der Domsegmente 12, die eben zu Querkräften und Momenten, wie beim Stand der Technik, führen, finden nicht statt. Im Gegenteil lassen sich mittels der erfindungsgemäßen Vorrichtung 10 sogar die eigenen Gewichtskräfte infolge der Erdanziehung zusätzlich zum/beim Einspannen und Ausrichten der Domsegmente 12 ausnutzen. Im Ergebnis bringt die erfindungsgemäße Vorrichtung 10 gegenüber dem Stand der Technik eine Vielzahl, zudem herausragender Vorteile mit sich. Dies gilt insbesondere wieder im Hinblick auf eine besonders einfache, kompakte und zuverlässige Bauweise zum einen und auf eine ausgesprochen hohe Montage- bzw. Fertigungsgenauigkeit zum anderen.

Die Längsachse 22 der Tragstruktur 18 ist bei der vorliegenden Ausführungsform der erfindungsgemäßen Vorrichtung 10 zugleich die Längs- und Symmetrieachse der Vorrichtung 10 insgesamt und entspricht auch einer gemeinsamen Längsachse von Spanneinrichtungen 24. Die Spanneinrichtungen 24 sind zueinander und um die Längsachse 22 in gleicher Teilung entsprechend der Anzahl der Spanneinrichtungen 24 angeordnet.

Sind beispielsweise zwei Spanneinrichtungen 24 vorgesehen, sind die beiden Spanneinrichtungen 24 in einer Teilung von 180° vorgesehen und nehmen eine entsprechende Fläche der - hier: kreisförmigen - Tragstruktur 18 ein. Bei drei Spanneinrichtungen 24 ergibt sich eine Teilung von 120°, bei vier Spanneinrichtungen 24 eine Teilung von 90°, bei fünf Spanneinrichtungen 24 eine Teilung von 72°, bei sechs Spanneinrichtungen 24 eine Teilung von 60°, bei sieben Spanneinrichtungen 24 eine Teilung von 51,43°, bei acht Spanneinrichtungen 24 eine Teilung von 45°, usw.

Die erfindungsgemäße Vorrichtung 10 umfasst wenigstens zwei Spanneinrichtungen 24 zum Aufnehmen, Fixieren und Einspannen von jeweils einem dünnwandigen Domsegment 12, das/die mit einem oder mehreren weiteren Domsegment/en 12 zu einem Dom 14 oder Domring gebildet und gefügt werden soll.

Bei der Ausführungsform der erfindungsgemäßen Vorrichtung 10, die anhand der Fig. 2 bis 14 vorgestellt ist, sind beispielhaft insgesamt acht Spanneinrichtungen 24 vorgesehen. Nachfolgend wird zur Vereinfachung ausschließlich auf die Ausführungsform der erfindungsgemäßen Vorrichtung 10 der Fig. 2 bis 14 mit acht Spanneinrichtungen 24 Bezug genommen, obgleich ohne weiteres auch eine Anzahl von Spanneinrichtungen 24 größer zwei und kleiner acht oder größer acht möglich ist.

Die Spanneinrichtungen 24 sind von der Tragstruktur 18, wie aus den Fig. 2A und 2B ersichtlich ist, aufgenommen und gehalten. Dabei sind die Spanneinrichtungen 24 in einer gemeinsamen Ebene 26 um die gemeinsame Längsachse 22 von Vorrichtung 10 und Tragstruktur 18 angeordnet. Die gemeinsame Ebene 26 ist im Wesentlichen parallel zu der Basis 20 ausgerichtet. Bei der gemeinsamen Ebene 26 handelt es sich vorzugsweise um die Horizontalebene.

Weiterhin sind die Spanneinrichtungen 24 in der gemeinsamen Ebene 26 radial von außen nach innen, und umgekehrt, bewegbar, und zwar relativ zu der gemeinsamen Längsachse 22 und/oder relativ zu den weiteren der wenigstens zwei, insbesondere acht, Spanneinrichtungen 24. Die Spanneinrichtungen 24 sind zu deren Verschiebung oder Bewegung jeweils mit einer Antriebseinrichtung ausgerüstet (nicht im Einzelnen dargestellt).

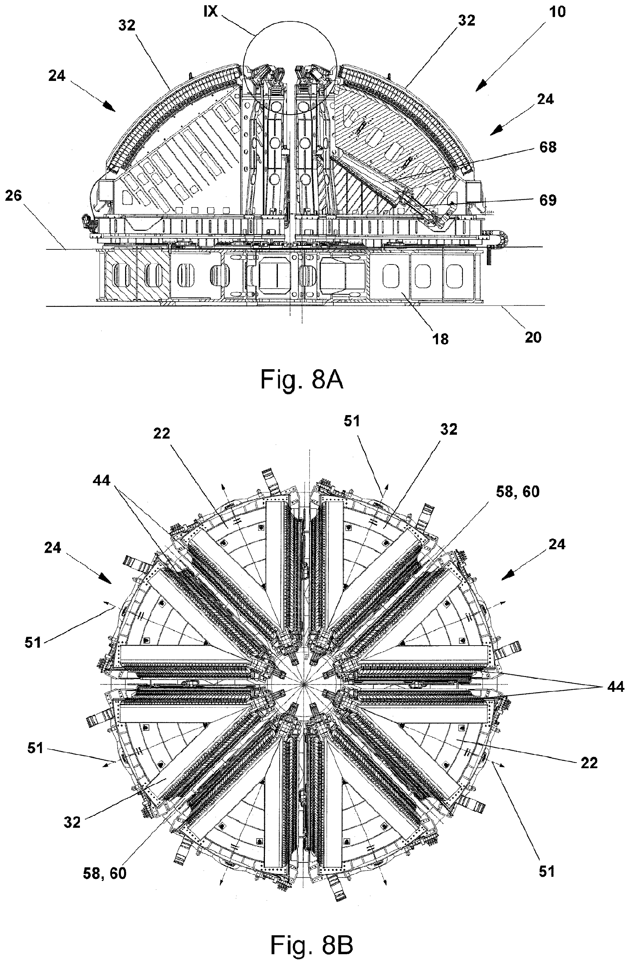

Insbesondere sind die Spanneinrichtungen 24 derart ausgebildet, dass die Domsegmente 12, welche in ihrer Anzahl der Anzahl von Spanneinrichtungen 24 entsprechen, in der gemeinsamen Ebene 26 relativ aus einer Einlege- und Spannposition entsprechend den Fig. 2A bis 7 in eine Bearbeitungsposition entsprechend den Fig. 8A bis 10 bzw. 11A bis 13 bewegbar sind, und umgekehrt. Dabei werden die Spanneinrichtungen 24 in radialer Richtung aus der Einlege- und Spannposition in die Bearbeitungsposition auf die gemeinsame Längsachse 22 zu sowie aus der Bearbeitungsposition in die Einlege- und Spannposition von der gemeinsamen Längsachse 22 weg bewegt.

Da die Spanneinrichtungen 24 allesamt jeweils zueinander identisch ausgebildet und/oder angeordnet sind, soll im Folgenden zur Vereinfachung jeweils stellvertretend lediglich eine Spanneinrichtung 24 beschrieben und erläutert werden.

Wie den Fig. 2A und 2B zu entnehmen ist, umfasst die Spanneinrichtung 24 ein Spannelement 28, an welchem das Domsegment 12 zur Anlage kommt. Das Spannelement 28 korrespondiert mit der Innenseite 30 bzw. inneren Oberfläche des Domsegmentes 12 in Form und Abmessung.

Des Weiteren umfasst die Spanneinrichtung 24 einen Spannarm 32. Der Spannarm 32 ist an dem Spannelement 28 über eine Gelenkverbindung verschwenkbar, insbesondere auf- und zuklappbar, angebracht.

Das Domsegment 12 ist von dem Spannelement 28 und dem Spannarm 32 aufnehmbar bzw. einlegbar. Mit anderen Worten wird das Domsegment 12 von der Spanneinrichtung 24 aufgenommen bzw. wird zwischen Spannelement 28 und Spannarm 32 eingelegt.

Bevor mit der Aufnahme bzw. Einlegung der Domsegmente 12 in die Vorrichtung 10 begonnen wird, werden zunächst noch einige Vorbereitungsarbeiten durchgeführt.

Die Domsegmente 12 eines bestimmten Boostergehäuses oder Treibstofftanks, etwa für einen LH2- oder LOX-Tank, entsprechen einander in Form und Abmessung. Nach deren Fertigung werden die Domsegmente 12 einer Sorte von Tank zum Beispiel in einem mobilen Palettensystem oder dergleichen Magazin (nicht gezeigt) aufgenommen und zu der Vorrichtung 10 der Erfindung transportiert. Das Palettensystem ist mobil und wird entweder manuell oder automatisch, etwa mittels Fahrwagen, zu der Vorrichtung 10 bracht. Die Domsegmente 12 sind entsprechend der Einlegereihenfolge vorsortiert. Zur Energieversorgung wird das System angedockt.

Die erfindungsgemäße Vorrichtung 10 befindet sich in einer Grundgestellung, in welche die Spannarme 32 geschlossen sind und sich in einer abgesteckten Einlegeposition befinden (im Einzelnen nicht gezeigt).

Die erfindungsgemäße Vorrichtung 10 wird nach Reinigung und Überprüfung auf verbliebene Verunreinigungen in die Einlege- und Spannposition verbracht. Die Einlege- und Spannposition der Vorrichtung 10 ist in den Fig. 2A und 2B veranschaulicht.

Die Spannarme 32 werden geöffnet, d.h. aus einem geschlossenen Zustand in den geöffneten Zustand verbracht, indem die Spannarme 32 von den Spannelementen 28 abgehoben und auf- bzw. herausoder hochgeklappt werden. Die Öffnung der Spannarme 32 kann dabei zeitlich entweder sequenziell nacheinander oder gleichzeitig erfolgen. Die Spannarme 32 befinden sich in der Einlege- und Spannposition in geöffnetem Zustand.

Entsprechend den Fig. 2A und 2B ist die Öffnung sämtlicher Spannarme 32 erfolgt. Durch Anschläge oder dergleichen Absteckungselemente lässt sich der Öffnungsgrad der Spannarme 32 begrenzen (nicht gezeigt) und ein vollständiges Umklappen der Spannarme 32 vermeiden.

Die Domsegmente 12 werden aus dem mobilen Palettensystem oder dergleichen Magazin entnommen und zwischen die Spannelemente 28 und geöffneten Spannarme 32 eingelegt. Die Entnahme aus dem mobilen Palettensystem und das Einlegen in die Vorrichtung 10 kann mittels Bedienungspersonals, d.h. manuell, und/oder automatisiert durch einen Roboter, zum Beispiel einen Einlegeroboter oder dergleichen, erfolgen. Der Roboter ist der Vorrichtung 10 zugeordnet. Die Einlegung der Domsegmente 32 auf bzw. in die Spannarme 32 wird passgenau vorgenommen.

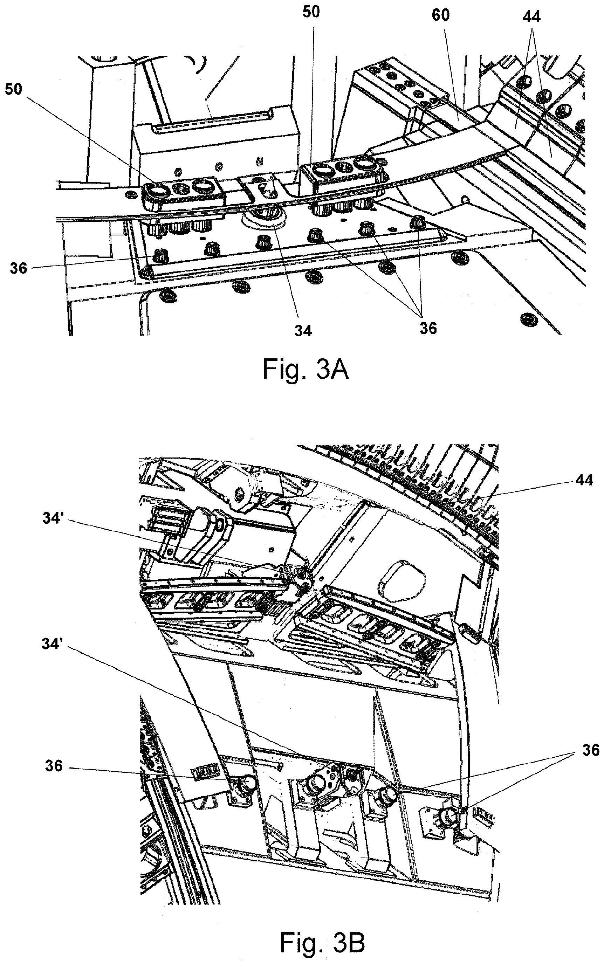

Die Spanneinrichtung 24 weist, wie aus den Fig. 3A und 3B ersichtlich ist, obere und untere Zentrierdorne 34, 34' und/oder Anschlagelemente 36 bzw. Anschlagstücke auf, die mit entsprechenden Ausnehmungen, Ausschnitten oder dergleichen Hinterschneidungen an dem Domsegment 12 zusammenwirken. Damit lässt sich das Domsegment 12 in der Spanneinrichtung 24 auf dem Spannelement 28 bzw. zwischen dem Spannelement 28 und dem Spannarm 32 exakt positionieren. Zugleich kann auf diese Weise eine wiederholgenaue Positioniergenauigkeit sichergestellt werden.

Die oberen und unteren Zentrierdorne 34, 34' und/oder Anschlagelemente 36 sind vorzugsweise ausfahrbar, teleskopierbar, herausklappbar oder dergleichen bewegbar ausgebildet, wodurch die Einlegung noch zusätzlich vereinfacht und damit zeitsparend bewerkstelligt werden kann.

Die Domsegmente 12 werden nacheinander in die Spanneinrichtungen 24 eingelegt. Dabei dreht die Tragstruktur 18 für jedes Domsegment 12 um einen Winkel von - hier - 45° weiter, bis sämtliche Spanneinrichtungen 24 mit einem Domsegment 12 bestückt sind.

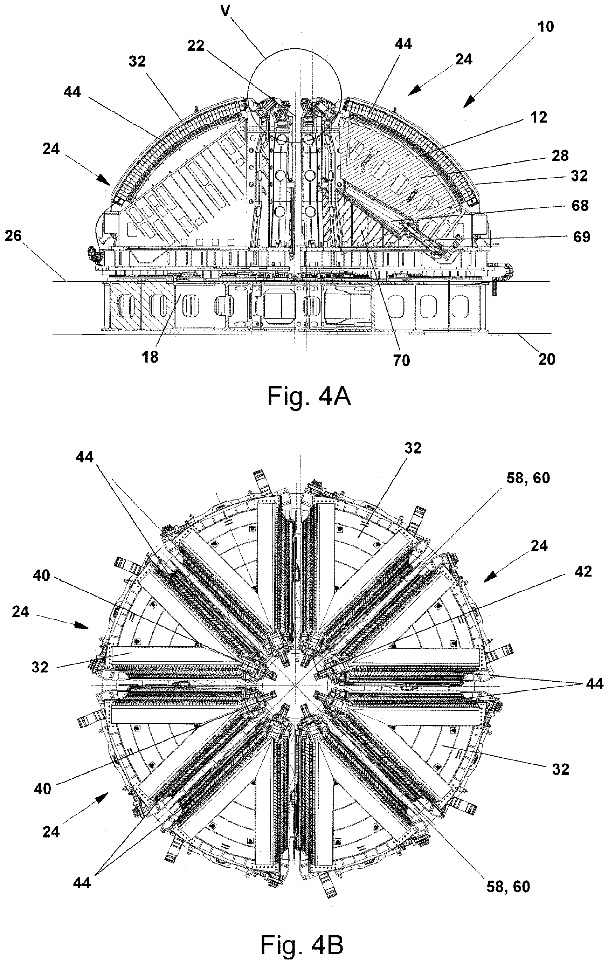

Im Anschluss daran werden sämtliche Spannarme 32, wie die Fig. 4A und 4B zeigen, zu- bzw. zurück- oder hochgeklappt. Die Spannarme 32 befinden sich nunmehr in der Einlege- und Spannposition in geschlossenem Zustand.

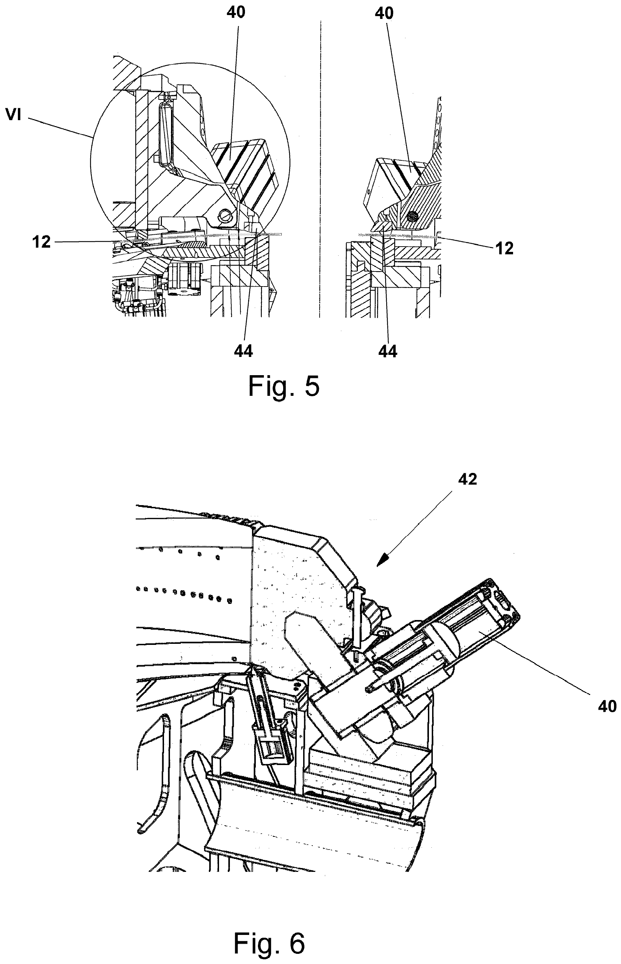

Entsprechend der Fig. 6 umfasst die Spanneinrichtung 24 weiterhin wenigstens ein Verriegelungselement 40, um den Spannarme 32 nach dem Zu- bzw. Zurück- oder Hochklappen mit dem Spannelement 28 zu verriegeln und so zu sichern sowie vor allem in unveränderbarer Position zu halten. Das Verriegelungselement 40 befindet sich an Stirnseite 42 der Spanneinrichtung 24, die der Längsachse 22 im geschlossenen Zustand der Einlege- und Spannposition zugewandt und dieser benachbart ist.

Die Verriegelung der Spanneinrichtung 24 soll dabei lösbar und/oder ganz bevorzugt spielfrei bzw. passgenau erfolgen. In vorteilhafter Weise ist das/sind die Verriegelungselement/e 40 als Bolzen oder dergleichen Zylinder ausgestaltet. Eine ausfahrbare, teleskopierbare, herausklappbare oder dergleichen bewegbare Ausbildung des/der Verriegelungselemente/s 40 ist zur weiteren Automatisierung und automatischen Handhabung von besonderem Vorteil.

Die Spanneinrichtung 24 der Vorrichtung 10 nach der Erfindung umfasst des Weiteren Spannbacken 44, die entsprechend der Fig. 3C im längsseitigen Randbereich 46 der Spanneinrichtung 24, insbesondere des Spannarms 32, angeordnet sind. Bis zu und nach dem Verriegeln der Spanneinrichtung 24 befinden sich die Spannbacken 44 in gelöstem bzw. ungespanntem Zustand, wie in der Fig. 5, rechte Ansicht, dargestellt ist. Dabei stehen die Spannbacken 44 der Spanneinrichtung 24 im längsseitigen Randbereich 42 über bzw. oberhalb dem Domsegment 12. Spannbacken 44 und Domsegment 12 berühren einander nicht.

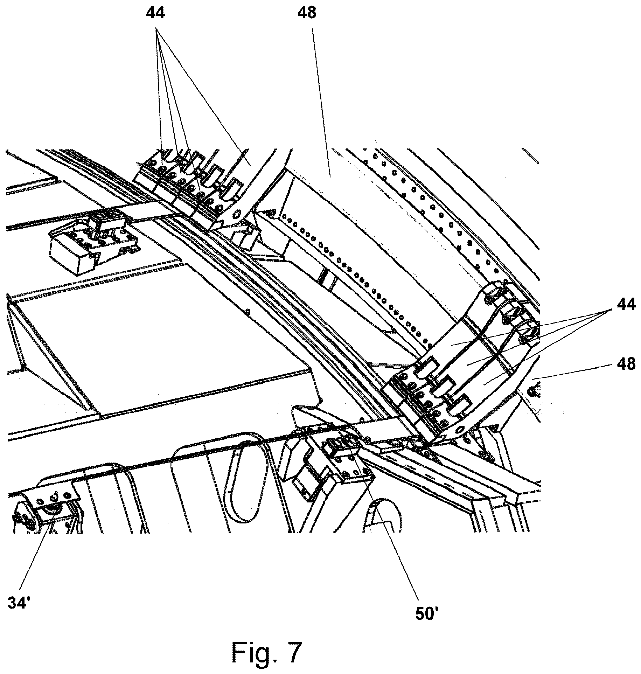

Die Spannbacken 44 der Spanneinrichtung 24 spannen nun das Domsegment 12 ein. Wie in der Fig. 7 gezeigt ist, weist die Spanneinrichtung 24 ein Schlauchspannelement 48 auf, welches die Spannbacken 44 mit Druck beaufschlagt. Der Druck beträgt vorzugsweise 3 bar. Das Domsegment 12 ist in der Spanneinrichtung 24, also zwischen Spannelement 28 und Spannarm 30, lösbar einspannbar und wird auf diese Weise festgelegt und gehalten. Die Spannbacken 44 befinden sich nunmehr in gespanntem Zustand, wie in der Fig. 5, linke Ansicht, dargestellt ist

Zusätzlich ist die Spanneinrichtung 24 mit oberen und unteren Seitenfixierungselementen 50, 50' ausgestattet, wie in den Fig. 3A und 7 schematisch dargestellt ist. Die Seitenfixierungselemente 50, 50' wirken wiederum mit entsprechenden Ausnehmungen, Ausschnitten oder dergleichen Hinterschneidungen an dem Domsegment 12 zusammen. Die Seitenfixierungselemente 50, 50' verhindern wirksam jegliche, insbesondere seitliche, Verschiebung des Domsegmentes 12 in der Spanneinrichtung 24 während einer nachfolgenden Bearbeitung.

Die Seitenfixierungselemente 50, 50' befinden sich auf beiden Seiten der Spanneinrichtung 24, jeweils einmal für das Domsegment 12 des LOX- und/oder LH2-Tanks. Vorteilhafterweise sind die Seitenfixierungselemente 50, 50' ausfahrbar, teleskopierbar, herausklappbar oder dergleichen bewegbar ausgebildet. Die Zylinder zu deren Betätigung werden beim Ausfahren mit einem Druck von vorzugsweise 1 bar beaufschlagt.

Mit der Betätigung bzw. dem Ausfahren der Seitenfixierungselemente 50, 50' ist der Spannzustand des Domsegmentes 12 in der Spanneinrichtung 24 und damit zugleich das Ende der Einlege- und Spannposition erreicht.

Wie in den Fig. 8A bis 10 gezeigt ist, werden die Spanneinrichtungen 24 mit dem jeweiligen eingespannten Domsegment 12 nach dem Einlegen und Einspannen in eine Frässtellung als eine erste Bearbeitungsposition verfahren. Die Spanneinrichtungen 24 werden, wie in der Fig. 8B angedeutet ist, entsprechend den Pfeilen 51 radial von innen nach außen von der Längsachse 22 weg verschoben bzw. bewegt.

In der Frässtellung als der ersten Bearbeitungsposition sind die Spanneinrichtungen 24 weiterhin mit dem Verriegelungselement 40, insbesondere Bolzen oder dergleichen Zylinder, zur lösbaren, insbesondere spielfreien, Verriegelung blockiert und gesichert.

Die Domsegmente 12, die in jeweils zwei einander benachbarten Spanneinrichtungen 24 eingespannt sind, werden zueinander auf einen Abstand gebracht, der ausreichend groß ist, um die zwei Domsegmente 12 mit einem Fräser eines Fräskopfes 52 bearbeiten zu können. Der Fräskopf 52 ist Bestandteil einer Einrichtung 54 zur Bearbeitung mindestens eines Teils des Domsegmentes 12, welche den Spanneinrichtungen 24 der erfindungsgemäßen Vorrichtung 10 zugeordnet ist.

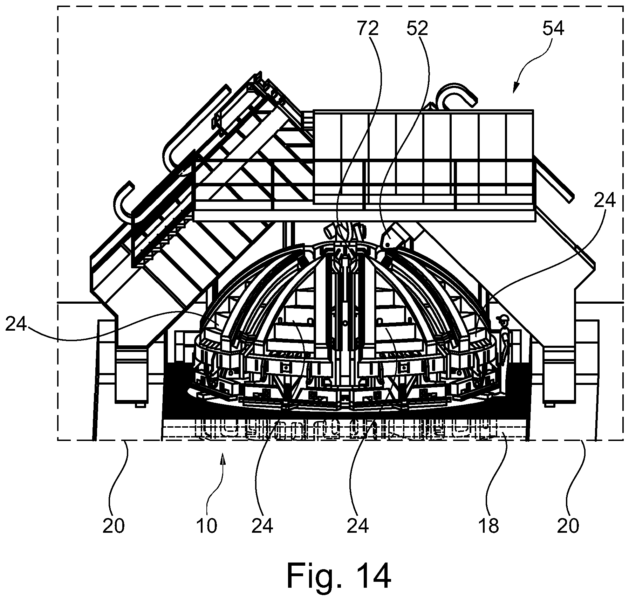

Entsprechend der Fig. 14 ist die Bearbeitungseinrichtung 54 bei der vorliegenden Ausführung als Portal ausgestaltet, welches über der erfindungsgemäßen Vorrichtung 10 angeordnet und oberhalb relativ zu der Vorrichtung 10 längsverfahrbar, d.h. in der Fig. 14 senkrecht zur Blattebene verfahrbar, ist.

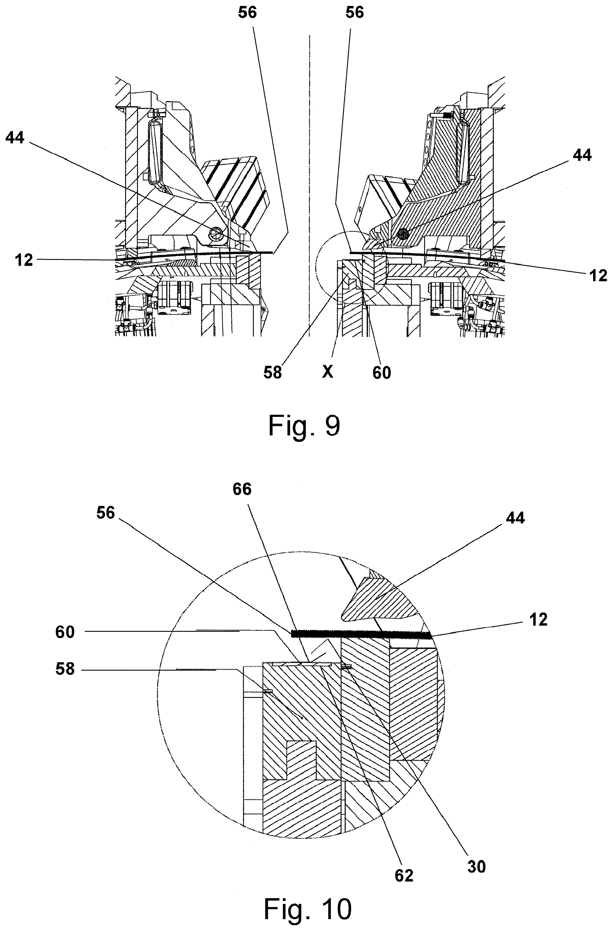

Die Spannbacken 44 der Spanneinrichtung 24 beaufschlagen das Domsegment 12 entsprechend Fig. 9, linke Ansicht, weiterhin und halten das Domsegment 12 eingespannt sowie in Position.

Alle Domsegmente 12 werden an den einander zugewandten Anlageflächen 56 auf Maß gefräst. Dies kann in einem Arbeitsgang oder getrennten Arbeitsgängen erfolgen. Dabei werden die erzeugten Späne direkt und automatisch abgesaugt. Nach dem Fräsvorgang kann die Spanneinrichtung 24 gegebenenfalls nochmals gesondert, zum Beispiel durch Bedienungspersonal, gegebenenfalls von Hand abgesaugt werden.

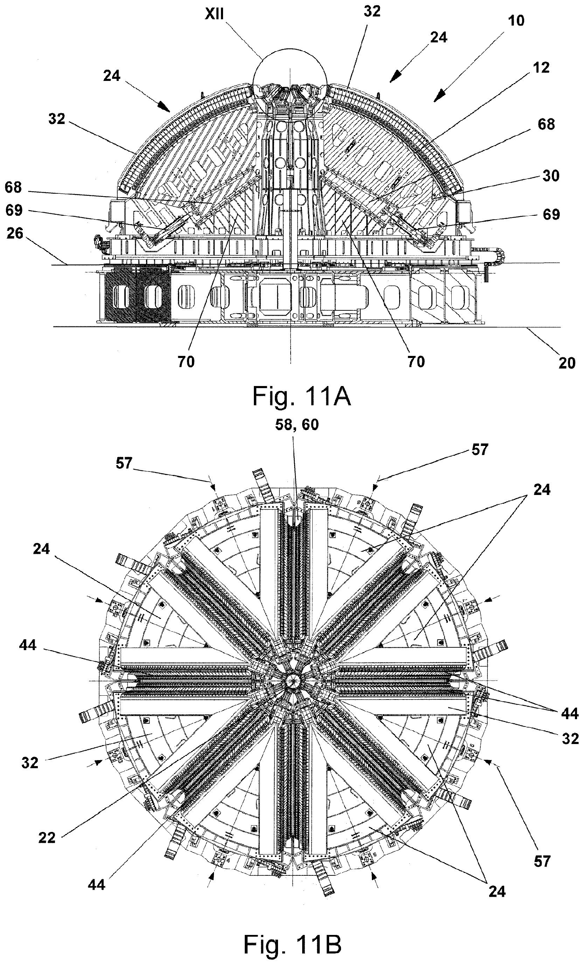

Wie in den Fig. 11A bis 13 gezeigt ist, werden die Spanneinrichtungen 24 mit dem jeweiligen eingespannten Domsegment 12 nach dem Fräsen in eine Schweißstellung als eine weitere Bearbeitungsposition verfahren. Die Spanneinrichtungen 24 werden, wie in der Fig. 11B angedeutet ist, entsprechend den Pfeilen 57 radial von außen nach innen auf die Längsachse 22 zu bzw. zur Längsachse 22 hin verschoben bzw. bewegt.

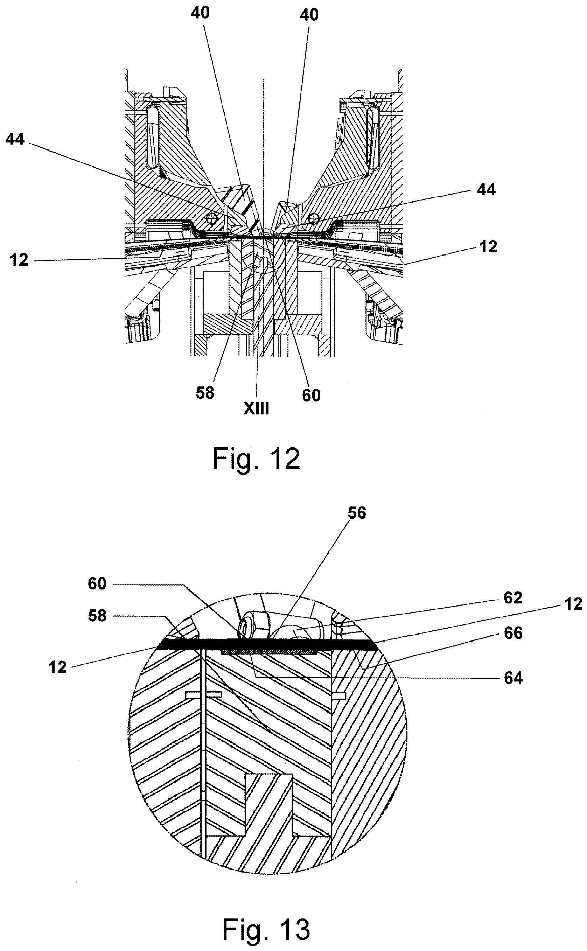

Durch das Zusammenfahren der Spanneinrichtungen 24 kommen die Domsegmente 12 entsprechend den Fig. 12 und 13 nicht nur an deren Anlageflächen 56 zur gegenseiteigen Anlage bzw. in gegenseitigen Kontakt, sondern werden auch gegeneinander verspannt, um den Fügespalt zu minimieren. Die maximale Fügekraft der Antriebseinrichtung bzw. des Aktuators liegt etwa bei 10 t, wobei die Haltefügekraft ca. 6,7 t beträgt. Bei der Inbetriebnahme wird die Kraft von Antriebseinrichtung bzw. Aktuator auf 2,5 t (25 kN) begrenzt. Dies entspricht einer seitlichen Anpresskraft von 3,25 t (32,5 kN).

Auch in der Schweißstellung als einer weiteren Bearbeitungsposition sind die Spanneinrichtungen 24 weiterhin mit dem Verriegelungselement 40, insbesondere Bolzen oder dergleichen Zylinder, zur lösbaren, insbesondere spielfreien, Verriegelung blockiert und gesichert.

Nach dem Zusammenfahren erfolgt eine Prüfung, ob die Domsegmente 12 bzw. deren zuvor auf Maß gefrästen Anlageflächen 56 von zwei einander benachbarten Domsegmenten 12 zueinander bündig sind.

Sofern die Domsegmente 12 zueinander bündig ausgerichtet sind, werden die Domsegmente 12 um bis zu 1,0 mm, insbesondere bis zu 0,3 mm, aufgeweitet. Dies kann durch Spannkräfte von zum Beispiel 400 t erfolgen.

Zu diesem Zweck ist die Spanneinrichtung 24 derart ausgebildet, dass das Domsegment 12 teilweise, insbesondere im längsseitigen Randbereich 46 der Spanneinrichtung 24, radial von innen nach außen mit Druck beaufschlagbar ist.

Wie in den Fig. 5, 9, 10, 12 und 13 zum Teil auch vergrößert dargestellt ist, umfasst die Spanneinrichtung 24 eine Wurzelstütze 58 oder dergleichen Element bzw. Bauteil, welche/s im längsseitigen Randbereich 46 der Spanneinrichtung 24 angeordnet ist. Die Wurzelstütze 58 dient als Halterung bzw. Gegenlager für die zwei miteinander zu verschweißenden Domsegmente 12 im Bereich von deren Anlageflächen 56. Des Weiteren ist die Spanneinrichtung 24 mit einem Wurzelstützelement 60 oder dergleichen -blech versehen, welches wiederum der Wurzelstütze 58 zugeordnet ist.

Das Wurzelstützelement 60 oder dergleichen -blech ist in eine Nut 62 oder Ausnehmung in der Wurzelstütze 58 eingelassen. Dabei fluchten die Oberfläche 64 des Wurzelstützelementes 60 oder dergleichen -blechs, welche dem Domsegment 12 zugewandt ist und an der Innenseite 30 des Domsegmentes 12 anliegt, und die Spannfläche 66 des Spannelementes 28, welche ebenfalls an der Innenseite 30 des Domsegmentes 12 anliegt, zueinander in einer Ebene.

Das Wurzelstützelement 60 selbst ist bevorzugt aus einem hochwarmfesten Material ausgebildet.

Entsprechend den Fig. 9 und 10 ist die Wurzelstütze 58 bis zur Prüfung der Bündigkeit der Anlageflächen 56 von zwei einander benachbarten Domsegmenten 12 eingefahren und befindet sich somit in ungespanntem Zustand. Demnach befindet sich die Wurzelstütze 58 samt Wurzelstützelement 60 unterhalb des Domsegmentes 12 bzw. dessen Innenseite 30 und in einem Abstand dazu.

Die Aufweitung von zwei benachbarten Domsegmenten 12 im Bereich von deren Anlageflächen 56 wird nach Fig. 11A konstruktiv dadurch erreicht, dass die Spanneinrichtung 24 ein Spannbetätigungselement 68 aufweist, das radial von außen nach innen, und umgekehrt, verschiebbar ist. Das Spannbetätigungselement 68 stützt sich an der Spanneinrichtung 24 ab und beaufschlagt die Wurzelstütze 58 sowie damit zugleich das Wurzelstützelement 60. Zur Abstützung des Spannbetätigungselementes 68 radial nach innen ist vorzugsweise ein Stützelement 70 vorgesehen.

Das Spannbetätigungselement 68 der Spanneinrichtung 24 ist, wie ebenfalls unter anderem aus der Fig. 11A hervorgeht, im Wesentlichen keilförmig und insbesondere als Keil ausgebildet.

Das Spannbetätigungselement 68 wird durch eine Antriebseinrichtung 69, etwa in Form eines Schrittmotors oder einer Kolbeneinrichtung, radial nach innen oder nach außen zurück verschoben. In den Fig. 2A, 4A und 8A ist das Spannbetätigungselement 68 in zurückgezogenem Zustand gezeigt. Das Spannbetätigungselement 68 ist dabei von der Längsachse 22, also von der Mitte der Vorrichtung 10, weg zurückgezogen. In der Fig. 11A sind die Spannbetätigungselemente 68 demgegenüber in ausgefahrenem Zustand gezeigt, in welchem das Spannbetätigungselement 68 hin zu der Längsachse 22, also in Richtung der Mitte der Vorrichtung 10, verschoben ist.

Die Aufweitung erfolgt daher durch die Schubbewegung des als Keil ausgebildeten Spannbetätigungselementes 68 radial von außen nach innen. Durch Verschiebung dessen radial von außen nach innen mit Druck und in einem Winkel von etwa 15° bis etwa 75°, insbesondere in einem Winkel von etwa 30° bis etwa 60°, ganz vorzugsweise in einem Winkel von etwa 45°, zu der Längsachse 22 der Tragstruktur 18 fährt die Wurzelstütze 58 und insoweit das Wurzelstützelement 60 nach außen, in Richtung des Domsegmentes 12. Mit der Aufweitung wird gewährleistet, dass beide zu verschweißende Domsegmente 12 auf dem Wurzelstützelement 60 vollständig aufliegen.

Durch die Spannbacken 44 und die Wurzelstütze 58 bzw. das Wurzelstützelement 60 wird über den/die komplette/n Bereich/Länge der Schweißnaht 17 eine konkrete Bauteilauflage erzeugt, wodurch ein fehlerfreier stabiler automatisierter Fertigungsprozess ermöglicht ist. Zusätzlich wird durch die konkrete Bauteilauflage der Wärmeeintrag in der Schweißnaht 17 reduziert bzw. die Wärme gleichmäßig und beschleunigt abgeführt, was höhere Schweißvorschübe ermöglicht und zu besseren physikalischen Schweißnahteigenschaften führt.

Nach dem Aufweiten werden die Domsegmente 12 in festgelegter Reihenfolge zunächst geheftet und anschließend fertig- bzw. durchgeschweißt.

Sämtliche Schweißarbeiten erfolgen über einen Schweißkopf 72 einer Schweißeinrichtung, die insbesondere als Rührreib (FSW)-Schweißeinrichtung ausgebildet ist. Der Schweißkopf 72 ist ebenfalls Bestandteil der Bearbeitungseinrichtung 54.

Nach dem Schweißvorgang werden die Wurzelstützen 58 wieder in ihre Ausgangsposition entsprechend den Fig. 2A, 4A und 8A gefahren, indem das Spannbetätigungselement 68 radial von außen nach innen zurückverschoben wird.

Im Anschluss daran werden die hergestellten Schweiß- und Fügenähte 17 einer Materialprüfung mittels einer güte- und materialprüfenden Einrichtung, insbesondere einer zerstörungsfreien Prüfungs- bzw. NDI (Non-Destructive Inspection)-Einrichtung, unterzogen. Die güte- und materialprüfende Einrichtung mit einem entsprechenden Prüfkopf kann ebenfalls Bestandteil der Bearbeitungseinrichtung 54 sein (nicht gezeigt).

In einer Materialprüfungsstellung als einer noch weiteren Bearbeitungsposition wird zunächst das Verriegelungselement 40, insbesondere Bolzen oder dergleichen Zylinder, gelöst, mittels welchem die Spanneinrichtungen 24 bzw. Spannarme 32 lösbar, insbesondere spielfrei, seit der Einlege- und Spannposition in geschlossenem Zustand und während der gesamten Fräs- und Schweißstellung als Bearbeitungspositionen verriegelt und gesichert waren.

Sodann werden jeweils zwei einander benachbarte Spannarme 32 leicht geöffnet, da der Prüfkopf (ebenfalls nicht dargestellt) der NDI-Einrichtung größer ist als der Spalt zwischen den Spannbacken 44. Um eine Kollision mit dem Portal zu vermeiden, können die Spannarme 32 jedoch nicht vollständig geöffnet werden.

Die Spanneinrichtungen 24 bzw. Spannarme 32 sind zu diesem Zweck über zusätzliche bzw. gesonderte Anschläge oder dergleichen Absteckungselemente blockiert und gesichert (ebenfalls nicht gezeigt). Die Absteckungselemente geben die Spannarme 32 somit nur teilweise frei, so dass sich die Spannarme 32 lediglich um einen bestimmten Öffnungsgrad, d.h. nur begrenzt, von den Spannelementen 28 abheben und auf- bzw. heraus- oder hochklappen lassen.

Das Portal wird zuletzt in seine Parkposition verbracht. Die Spannarme 32 können komplett geöffnet werden, um den Dom 14 bzw. Domring zu entnehmen. Dazu werden die Zentrierdorne 34, 34', Anschlagelemente 36 und Seitenfixierungselemente 52, 52' zurückgefahren.

Der fertig geschweißte Dom 14 bzw. Domring wird mit einer dafür vorgesehenen Traverse mit entsprechenden Bauteilaufnahmen entnommen.

Ohne im Einzelnen dargestellt zu sein, ist/sind bei der Ausführungsform der erfindungsgemäßen Vorrichtung 10, die vorstehend anhand der Fig. 2A bis 14 vorgestellt und erläutert ist, die Tragstruktur 18 oder dergleichen Rahmengestell und/oder die Spanneinrichtung 24 und/oder der Spannarm 32 und/oder die Zentrierdorne 34, 34' und/oder Anschlagelemente 36 und/oder Verriegelungselemente 40 und/oder Seitenfixierungselemente 52, 52' und/oder das Spannbetätigungselement 68 und/oder Anschläge oder dergleichen Absteckungselemente vorzugsweise elektromotorisch, mechanisch, pneumatisch oder hydraulisch betätigbar und/oder klappbar und/oder verschiebbar und/oder bewegbar oder dergleichen antreibbar.

In alternativer oder kumulativer Konstruktion können diese Bauteile auch unabhängig voneinander und/oder einzeln oder wahlweise oder sämtlich aufeinander abgestimmt synchronisierbar angetrieben werden, und zwar insbesondere auch durch eine Steuerung und/oder Regelung.

Darüber hinaus kann/können die Tragstruktur 18 und/oder das Spannelement 28 und/oder der Spannarm 32 und/oder das Spannbetätigungselement 68 und/oder das Stützelement 70 durch Wälzlager, insbesondere Kugel- oder Rollenlager, und/oder sonstige Linearführungen abstützbar und/oder führbar ausgestaltet sein.

Auch kann/können das Spannelement 28 und/oder der Spannarm 32 und/oder das Spannbetätigungselement 68 und/oder das Stützelement 70 mit einer Beschichtung aus Kunststoff, insbesondere aus Polytetrafluorethylen (PTFE), Polyoximethylen (POM) oder Polyimid (PI), mit oder ohne Aramid-, Glas-, Kohlen-, Nylon-, Polyethylen- und/oder Polyesterfaserverstärkung, und/oder einer Kombination daraus versehen sein.

Die Erfindung ist schließlich nicht auf die beschriebene oder dargestellte Ausführungsform der erfindungsgemäßen Vorrichtung 10 mit acht Spanneinrichtungen 24 beschränkt, wenngleich acht Spanneinrichtungen 24 eine optimale Anzahl darstellen, wie sich in der Praxis herausgestellt hat. Theoretisch reichen demnach zwei Spanneinrichtungen 24 aus, um die erfindungsgemäße Vorrichtung 10 in die Praxis umzusetzen. Die Handhabbarkeit und Automatisierung wird jedoch mit steigender Anzahl bis zu acht Spanneinrichtungen 24 zunehmend verbessert. Dies wiederum wirkt sich positiv auf die Qualität und Wirtschaftlichkeit bei der Herstellung von Domen 14 bzw. Domringen aus. Auch wenn mehr als acht Spanneinrichtungen 24 vorgesehen sind, ist die Vorrichtung 10 nach der Erfindung ohne weiteres einsatzfähig. Dabei sollte jedoch berücksichtigt werden, nicht zu viele Spanneinrichtungen 24 vorzusehen. Durch Zunahme von Bauteilen können die Stabilität einer solchen Vorrichtung insgesamt und damit die Qualität und Wirtschaftlichkeit bei der Herstellung von Domen 14 bzw. Domringen beeinflusst werden. Ohne im Einzelnen dargestellt zu sein, ist es schließlich ebenso denkbar, die Entnahme der Bauteile bzw. Domsegmente 12 aus dem mobilen Palettensystem und das Einlegen in die Vorrichtung 10 manuell, d.h. mittels Bedienungspersonals und/oder vorzugsweise (halb- bzw. voll-)automatisiert durch den Roboter bzw. Einlegeroboter vorzunehmen.

## Patentansprüche

1. Vorrichtung zum Einspannen und Ausrichten von dünnwandigen Domsegmenten (12), umfassend eine auf oder an einer Basis (20) abgestützte Tragstruktur (18) oder dergleichen Rahmengestell und wenigstens zwei, insbesondere acht, von der Tragstruktur (18) aufgenommene und gehaltene Spanneinrichtungen (24) zum Aufnehmen, Fixieren und Einspannen von jeweils einem mit einem oder mehreren weiteren dünnwandigen Domsegment/en (12) zu einem Dom (14) oder Domring zu bildenden und zu fügenden, dünnwandigen Domsegment (12), wobei die wenigstens zwei, insbesondere acht, Spanneinrichtungen (24) jeweils ein mit der Innenseite (30) des Domsegmentes (12) in Form und Abmessung korrespondierendes Spannelement (28) und einen verschwenkbaren, insbesondere aufund zuklappbaren, Spannarm (32), von welchen das Domsegment (12) aufnehmbar und zwischen welchen das Domsegment (12) einlegbar ist, umfassen, in einer gemeinsamen Ebene (26) um eine gemeinsame Längsachse (22) angeordnet sind und in der gemeinsamen Ebene (26) relativ zu der gemeinsamen Längsachse (22) und/oder relativ zu den weiteren der wenigstens zwei, insbesondere acht, Spanneinrichtungen (24) radial von außen nach innen, und umgekehrt, bewegbar sind.

2. Vorrichtung nach Anspruch 1, **dadurch gekennzeichnet, dass** die gemeinsame Längsachse (22) der Tragstruktur (18) zu einer Basis (20), insbesondere einem Fundament, einem (Fundament-)Boden eines Gebäudes oder einer sonstigen Grundkonsole, auf bzw. an welcher die Tragstruktur (18) abgestützt ist, senkrecht oder im Wesentlichen senkrecht verläuft bzw. verlaufend ausgerichtet.

3. Vorrichtung nach Anspruch 1 oder 2, **dadurch gekennzeichnet, dass** die Tragstruktur (18) oder dergleichen Rahmengestell gegenüber der Basis (20), insbesondere um die gemeinsame Längsachse (22), relativ drehbar ausgebildet und/oder angeordnet ist.

4. Vorrichtung nach einem der Ansprüche 1 bis 3, **dadurch gekennzeichnet, dass** die wenigstens zwei, insbesondere acht, Spanneinrichtungen (24) derart ausgebildet sind, dass die wenigstens zwei, insbesondere acht, Domsegmente (12) in der gemeinsamen Ebene (26) relativ aus einer Einlege- und Spannposition in eine Bearbeitungsposition auf die gemeinsame Längsachse (22) zu sowie aus der Bearbeitungsposition in die Einlege- und Spannposition von der gemeinsamen Längsachse (22) weg in radialer Richtung bewegbar sind, und umgekehrt.

5. Vorrichtung nach einem der Ansprüche 1 bis 4, **dadurch gekennzeichnet, dass** die Spanneinrichtung (24) eine Antriebseinrichtung zur Verschiebung oder Bewegung der Spanneinrichtung (24) in oder parallel zu oder im Wesentlichen in oder parallel zu der gemeinsamen Ebene (26) relativ gegenüber der Tragstruktur (18) umfasst.

6. Vorrichtung nach einem der Ansprüche 1 bis 5, **dadurch gekennzeichnet, dass** die Spanneinrichtung (24) mindestens einen, insbesondere ausfahrbaren, teleskopierbaren, herausklappbaren oder dergleichen bewegbaren, Zentrierdorn (34, 34') und/oder mindestens ein Anschlagelement (36) zur Positionierung des Domsegmentes (12) in der Spanneinrichtung (24), der/das mit entsprechenden Ausnehmungen, Ausschnitten oder dergleichen Hinterschneidungen an dem Domsegment (12) zusammenwirkt, umfasst.

7. Vorrichtung nach einem der Ansprüche 1 bis 6, **dadurch gekennzeichnet, dass** die Spanneinrichtung (24) wenigstens ein, insbesondere ausfahrbares, teleskopierbares, herausklappbares oder dergleichen bewegbares, Verriegelungselement (40), insbesondere einen Bolzen oder dergleichen Zylinder, zur lösbaren, insbesondere spielfreien, Verriegelung der Spanneinrichtung (24), insbesondere von Spannelement (28) und Spannarm (32), umfasst.

8. Vorrichtung nach einem der Ansprüche 1 bis 7, **dadurch gekennzeichnet, dass** die Spanneinrichtung (24) im längsseitigen Randbereich (46) der Spanneinrichtung (24) angeordnete Spannbacken (44) und ein die Spannbacken (44) mit Druck beaufschlagendes Schlauchspannelement (48), mit welchem das Domsegment (12) in der Spanneinrichtung (24) lösbar einspannbar ist, umfasst.

9. Vorrichtung nach einem der Ansprüche 1 bis 8, **dadurch gekennzeichnet, dass** die Spanneinrichtung (24), insbesondere ausfahrbare, teleskopierbare, herausklappbare oder dergleichen bewegbare, Seitenfixierungselemente (50, 50') zur Vermeidung einer Verschiebung des Domsegmentes (12) in der Spanneinrichtung (24), die mit entsprechenden Ausnehmungen, Ausschnitten oder dergleichen Hinterschneidungen an dem Domsegment (12) zusammenwirken, umfasst.

10. Vorrichtung nach einem der Ansprüche 1 bis 9, **dadurch gekennzeichnet, dass** die Spanneinrichtung (24) derart ausgebildet ist, dass das Domsegment (12) teilweise, insbesondere im längsseitigen Randbereich (46) der Spanneinrichtung (24), radial von innen nach außen mit Druck beaufschlagbar ist.

11. Vorrichtung nach einem der Ansprüche 1 bis 10, **dadurch gekennzeichnet, dass** die Spanneinrichtung (24) eine Wurzelstütze (58), welche im längsseitigen Randbereich (46) der Spanneinrichtung (24) angeordnet ist, umfasst.

12. Vorrichtung nach einem der Ansprüche 1 bis 11, **dadurch gekennzeichnet, dass** die Spanneinrichtung (24) eine Wurzelstütze (58), durch welche das Domsegment (12) in einem Winkel von etwa 15° bis etwa 75°, insbesondere in einem Winkel von etwa 30° bis etwa 60°, vorzugsweise in einem Winkel von etwa 45°, zu der gemeinsamen Längsachse (22) radial von innen nach außen mit Druck beaufschlagbar ist, umfasst.

13. Vorrichtung nach einem der Ansprüche 1 bis 12, **dadurch gekennzeichnet, dass** die Spanneinrichtung (24) ein radial von außen nach innen, und umgekehrt, verschiebbares, sich an der Spanneinrichtung (24) abstützendes Spannbetätigungselement (68) aufweist.

14. Vorrichtung nach einem der Ansprüche 1 bis 13, **dadurch gekennzeichnet, dass** das Spannbetätigungselement (68) der Spanneinrichtung (24) der Wurzelstütze (58) zugeordnet ist und die Wurzelstütze (58) durch Verschiebung mit Druck gegen das Domsegment (12) beaufschlagt.

15. Vorrichtung nach einem der Ansprüche 1 bis 14, **dadurch gekennzeichnet, dass** das Spannbetätigungselement (68) der Spanneinrichtung (24) im Wesentlichen keilförmig, insbesondere als Keil, ausgebildet ist.

16. Vorrichtung nach einem der Ansprüche 1 bis 15, **dadurch gekennzeichnet, dass** das Spannbetätigungselement (68) der Spanneinrichtung (24) die Wurzelstütze (58) durch Verschiebung in einem Winkel von etwa 15° bis etwa 75°, insbesondere in einem Winkel von etwa 30° bis etwa 60°, ganz vorzugsweise in einem Winkel von etwa 45°, zu der gemeinsamen Längsachse (22) und radial von außen nach innen mit Druck beaufschlagt, und umgekehrt.

17. Vorrichtung nach einem der Ansprüche 1 bis 16, **dadurch gekennzeichnet, dass** das Spannbetätigungselement (68) der Spanneinrichtung (24) an einem Stützelement (70) der Spanneinrichtung (24) radial nach innen abstützbar ist.

18. Vorrichtung nach einem der Ansprüche 1 bis 17, **dadurch gekennzeichnet, dass** die Spanneinrichtung (24) ein, insbesondere aus einem hochwarmfesten Material ausgebildetes, Wurzelstützelement (60) oder dergleichen -blech, welches der Wurzelstütze (58) zugeordnet ist, umfasst.

19. Vorrichtung nach einem der Ansprüche 1 bis 18, **dadurch gekennzeichnet, dass** das Wurzelstützelement (60) oder dergleichen -blech von einer in der Wurzelstütze (58) vorgesehenen Nut (62) oder Ausnehmung aufnehmbar ist.

20. Vorrichtung nach einem der Ansprüche 1 bis 19, **dadurch gekennzeichnet, dass** die Tragstruktur (18) oder dergleichen Rahmengestell und/oder die Spanneinrichtung (24) und/oder der Spannarm (32) und/oder der die Zentrierdorn/e (34, 34') und/oder der/die Anschlagelemente (36) und/oder das/die Verriegelungselement/e (40) und/oder Seitenfixierungselemente (50, 50') und/oder das Spannbetätigungselement (68) und/oder Anschläge oder dergleichen Absteckungselemente elektromotorisch, mechanisch, pneumatisch oder hydraulisch betätigbar und/oder klappbar und/oder verschiebbar und/oder bewegbar oder dergleichen antreibbar und/oder unabhängig voneinander und/oder einzeln oder sämtlich aufeinander abgestimmt synchronisierbar ist/sind.

21. Vorrichtung nach einem der Ansprüche 1 bis 20, **dadurch gekennzeichnet, dass** das Spannelement (28) und/oder der Spannarm (32) und/oder das Spannbetätigungselement (68) und/oder das Stützelement (70) mit einer Beschichtung aus Kunststoff, insbesondere aus Polytetrafluorethylen (PTFE), Polyoximethylen (POM) oder Polyimid (PI), mit oder ohne Aramid-, Glas-, Kohlen-, Nylon-, Polyethylen- und/oder Polyesterfaserverstärkung, und/oder einer Kombination daraus versehen ist/sind.

22. Vorrichtung nach einem der Ansprüche 1 bis 21, **dadurch gekennzeichnet, dass** die Tragstruktur (18) und/oder das Spannelement (28) und/oder der Spannarm (32) und/oder das Spannbetätigungselement (68) und/oder das Stützelement (70) durch Wälzlager, insbesondere Kugel- oder Rollenlager, und/oder sonstige Linearführungen abstützbar und/oder führbar sind.

23. Vorrichtung nach einem der Ansprüche 1 bis 22, **dadurch gekennzeichnet, dass** der Spanneinrichtung (24) wenigstens eine Einrichtung (54) zur Bearbeitung und/oder Fügung und/oder Materialprüfung mindestens eines Teils der Domsegmente (12) zugeordnet ist.

24. Vorrichtung nach einem der Ansprüche 1 bis 23, **dadurch gekennzeichnet, dass** die wenigstens eine Einrichtung (54) zur Bearbeitung und/oder Fügung und/oder Materialprüfung des mindestens einen Teils der Domsegmente (12) als Fräseinrichtung (52), Schneide- bzw. Schleif-, Dreh- oder dergleichen flächen- und spanbearbeitende Einrichtung, Schweißeinrichtung (72), insbesondere Rührreib (FSW)-Schweißeinrichtung, Löt- oder Klebeeinrichtung und/oder güte- und materialprüfende Einrichtung, insbesondere zerstörungsfreie Prüfungs- bzw. NDI (Non-Destructive Inspection)-Einrichtung, ausgebildet ist.

25. Verwendung einer Vorrichtung nach einem der vorhergehenden Ansprüche zum Einspannen und Ausrichten von dünnwandigen Domsegmenten (12) und/oder zum Bearbeiten, Fügen und/oder Materialprüfen, insbesondere Fräsen, Schneiden bzw. Schleifen, Drehen oder dergleichen Flächenbearbeitung, Verschweißen, vorzugsweise Rührreib (FSW)-Schweißen, Verlöten oder Verkleben und/oder zum zerstörungsfreien Prüfen bzw. NDI (Non-Destructive Inspection)-Prüfen von dünnwandigen Domsegmenten (12).

26. Verwendung der Vorrichtung nach einem der vorhergehenden Ansprüche zum Herstellen von rotationssymmetrischen und/ oder nicht rotationssymmetrischen schalenförmigen, insbesondere halbkugelförmig, kugelkappenförmig, kalottenförmig, ellipsoidkalottenförmig, konisch, elliptisch, in Cassini-Form, Halb-Torus-förmig oder mit dergleichen anderen Querschnittsformen ausgestalteten Bauteilen (14), und/oder zum Herstellen von Domen für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

## Claims

1. Device for clamping and aligning thin-walled dome segments (12), comprising a supporting structure (18) or similar framework supported on or at a base (20) and at least two, in particular eight, clamping devices (24) received and held by the supporting structure (18) for receiving, fixing and clamping a respective thin-walled dome segment (12) to be formed and joined with one or more further thin-walled dome segment (s) (12) to form a dome (14) or dome ring, whereby the at least two, in particular eight, clamping devices (24) each comprise a clamping element (28) corresponding in shape and dimension to the inside (30) of the dome segment (12) and a pivotable, in particular openable and closable, clamping arm (32), by which the dome segment (12) can be received and between which the dome segment (12) can be inserted, are arranged in a common plane (26) about a common longitudinal axis (22), and are movable radially from the outside to the inside, and vice versa, in the common plane (26) relative to the common longitudinal axis (22) and/or relative to the further of the at least two, in particular eight, clamping devices (24).

2. Device according to claim 1, **characterized in that** the common longitudinal axis (22) of the supporting structure (18) extends or is aligned, respectively, perpendicularly or substantially perpendicularly to a base (20), in particular to a foundation, a (foundation) floor of a building or other base bracket, on or at which the supporting structure (18) is supported.

3. Device according to claim 1 or 2, **characterized in that** the supporting structure (18) or similar framework is designed and/or arranged to be relatively rotatable with respect to the base (20), in particular about the common longitudinal axis (22).

4. Device according to one of claims 1 to 3, **characterized in that** the at least two, in particular eight, clamping devices (24) are designed in such a way that the at least two, in particular eight, dome segments (12) can be moved in the common plane (26) relatively from an insertion and clamping position into a machining position towards the common longitudinal axis (22) as well as from the machining position into the insertion and clamping position away from the common longitudinal axis (22) in the radial direction, and vice versa.

5. Device according to one of claims 1 to 4, **characterized in that** the clamping device (24) comprises drive means for displacing or moving the clamping device (24) in or parallel to or substantially in or parallel to the common plane (26) relative to the supporting structure (18).

6. Device according to one of claims 1 to 5, **characterized in that** the clamping device (24) comprises at least one centering mandrel (34, 34'), which can particularly be extended, telescoped, folded out or moved in a similar manner, and/or at least one stop element (36) for positioning the dome segment (12) in the clamping device (24), which cooperates with corresponding recesses, cutouts or similar undercuts on the dome segment (12).

7. Device according to one of claims 1 to 6, **characterized in that** the clamping device (24) comprises at least one locking element (40), which can particularly be extended, telescoped, folded out or moved in a similar manner, in particular a bolt or similar cylinder, for releasable, in particular play-free, locking of the clamping device (24), in particular of the clamping element (28) and clamping arm (32) .

8. Device according to one of claims 1 to 7, **characterized in that** the clamping device (24) comprises clamping jaws (44) arranged in the longitudinal edge region (46) of the clamping device (24) and a hose clamping element (48) which applies pressure to the clamping jaws (44) and by means of which the dome segment (12) can be releasably clamped in the clamping device (24).

9. Device according to one of claims 1 to 8, **characterized in that** the clamping device (24) comprises lateral fixing elements (50, 50'), which can particularly be extended, telescoped, folded out or moved in a similar manner, for preventing displacement of the dome segment (12) in the clamping device (24), which interact with corresponding recesses, cutouts or similar undercuts on the dome segment (12).

10. Device according to one of claims 1 to 9, **characterized in that** the clamping device (24) is designed in such a way that the dome segment (12) can be partially subjected to radial pressure from the inside to the outside, in particular in the longitudinal edge region (46) of the clamping device (24).

11. Device according to one of claims 1 to 10, **characterized in that** the clamping device (24) comprises a root support (58) which is arranged in the longitudinal edge region (46) of the clamping device (24).

12. Device according to one of claims 1 to 11, **characterized in that** the clamping device (24) comprises a root support (58) by means of which the dome segment (12) can be subjected to pressure radially from the inside to the outside at an angle of about 15° to about 75°, in particular at an angle of about 30° to about 60°, preferably at an angle of about 45°, with respect to the common longitudinal axis (22).

13. Device according to one of claims 1 to 12, **characterized in that** the clamping device (24) has a clamping actuating element (68) which can be displaced radially from the outside to the inside, and vice versa, and is supported on the clamping device (24).

14. Device according to one of claims 1 to 13, **characterized in that** the clamping actuating element (68) of the clamping device (24) is assigned to the root support (58) and applies pressure to the root support (58) against the dome segment (12) by displacement.

15. Device according to one of claims 1 to 14, **characterized in that** the clamping actuating element (68) of the clamping device (24) is substantially wedge-shaped, in particular designed as a wedge.

16. Device according to one of claims 1 to 15, **characterized in that** the clamping actuating element (68) of the clamping device (24) pressurizes the root support (58) by displacement at an angle of about 15° to about 75°, in particular at an angle of about 30° to about 60°, very preferably at an angle of about 45°, to the common longitudinal axis (22) and radially from the outside to the inside, and vice versa.

17. Device according to one of claims 1 to 16, **characterized in that** the clamping actuating element (68) of the clamping device (24) can be supported radially inwards on a supporting element (70) of the clamping device (24).

18. Device according to one of claims 1 to 17, **characterized in that** the clamping device (24) comprises a root support element (60) or similar sheet, in particular made of a hightemperature material, which is assigned to the root support (58) .

19. Device according to one of claims 1 to 18, **characterized in that** the root support element (60) or similar sheet is receivable by a groove (62) or recess provided in the root support (58).

20. Device according to one of claims 1 to 19, **characterized in that** the supporting structure (18) or similar framework and/or the clamping device (24) and/or the clamping arm (32) and/or the centering mandrel(s) (34, 34') and/or the stop element(s) (36) and/or the locking element(s) (40) and/or lateral fixing elements (50, 50') and/or the clamping actuating element (68) and/or stops or similar positioning elements can be actuated and/or folded and/or displaced and/or moved or the like driven by electric motor, mechanically, pneumatically or hydraulically and/or can be synchronized independently of one another and/or individually or all in coordination with one another.

21. Device according to one of claims 1 to 20, **characterized in that** the clamping element (28) and/or the clamping arm (32) and/or the clamping actuating element (68) and/or the supporting element (70) is/are provided with a coating of plastic, in particular of polytetrafluoroethylene (PTFE), polyoxymethylene (POM) or polyimide (PI), with or without aramide, glass, carbon, nylon, polyethylene and/or polyester fiber reinforcement, and/or a combination thereof.

22. Device according to one of claims 1 to 21, **characterized in that** the supporting structure (18) and/or the clamping element (28) and/or the clamping arm (32) and/or the clamping actuating element (68) and/or the supporting element (70) can be supported and/or guided by rolling bearings, in particular ball or roller bearings, and/or other linear guides.

23. Device according to one of claims 1 to 22, **characterized in that** the clamping device (24) is assigned to at least one device (54) for machining and/or joining and/or material testing of at least a part of the dome segments (12).

24. Device according to one of claims 1 to 23, **characterized in that** the at least one device (54) for machining and/or joining and/or material testing of the at least one part of the dome segments (12) takes the form of a milling device (52), cutting or grinding, respectively, turning or similar surface- and chip-processing device, welding device (72), in particular friction stir welding (FSW) device, soldering or bonding device and/or quality- and material-testing device, in particular non-destructive inspection (NDI) device.

25. Use of a device according to one of the preceding claims for clamping and aligning thin-walled dome segments (12) and/or for machining, joining and/or material testing, in particular milling, cutting or grinding, respectively, turning or similar surface machining, welding, preferably friction stir welding (FSW), soldering or gluing and/or for non-destructive inspection (NDI) of thin-walled dome segments (12).

26. Use of a device according to one of the preceding claims for manufacturing rotationally symmetric and/or not rotationally symmetric shell-shaped components (14), particularly hemispherical, spherical-shaped, dome-shaped, ellipsoid-spherical shaped, cone-shaped or ellipsoid components or components in Cassini-form, semi-torus form or other similar cross-sectional shapes, and/or for manufacturing domes for rocket fuel tanks, satellite tanks, parabolic antennas, parabolic reflector shells, parabolic solar collectors, headlamp housings, container floors, tower cupolas, pressure domes or similar.

## Revendications

1. Dispositif de serrage et d'alignement de segments de dôme (12) à paroi mince, comprenant une structure porteuse (18) ou un châssis similaire, s'appuyant sur ou contre une base (20), et au moins deux, en particulier huit, ensembles de serrage (24) reçus et retenus par la structure porteuse (18) et destinés à recevoir, fixer et serrer un segment de dôme respectif (12) à paroi mince à former et à assembler avec un ou plusieurs autres segments de dôme (12) à paroi mince pour former un dôme (14) ou un anneau de dôme, dans lequel lesdits au moins deux, en particulier huit, ensembles de serrage (24) comprennent chacun un élément de serrage (28), dont la forme et les dimensions correspondent à la face intérieure (30) du segment de dôme (12), et un bras de serrage (32) pivotant, en particulier susceptible d'être ouvert et fermé par rabattement, élément et bras par lesquels le segment de dôme (12) peut être reçu et entre lesquels le segment de dôme (12) peut être inséré, lesdits ensembles de serrage sont disposés dans un plan commun (26) autour d'un axe longitudinal commun (22) et lesdits ensembles de serrage sont mobiles dans le plan commun (26) radialement de l'extérieur vers l'intérieur, et inversement, par rapport à l'axe longitudinal commun (22) et/ou par rapport aux autres desdits au moins deux, en particulier huit, ensembles de serrage (24).

2. Dispositif selon la revendication 1, **caractérisé en ce que** l'axe longitudinal commun (22) de la structure porteuse (18) s'étend ou est aligné de manière à s'étendre perpendiculairement ou sensiblement perpendiculairement à une base (20), en particulier une fondation, un plancher (de fondation) d'un bâtiment ou une autre console de base, sur laquelle ou contre laquelle s'appuie la structure porteuse (18) .

3. Dispositif selon la revendication 1 ou 2, **caractérisé en ce que** la structure porteuse (18) ou le châssis similaire est réalisé(e) et/ou disposé(e) de manière à pouvoir tourner relativement par rapport à la base (20), en particulier autour de l'axe longitudinal commun (22).

4. Dispositif selon l'une des revendications 1 à 3, **caractérisé en ce que** lesdits au moins deux, en particulier huit, ensembles de serrage (24) sont réalisés de telle sorte que lesdits au moins deux, en particulier huit, segments de dôme (12) peuvent être déplacés en direction radiale dans le plan commun (26) relativement depuis une position d'insertion et de serrage jusque dans une position d'usinage vers l'axe longitudinal commun (22) ainsi que depuis la position d'usinage jusque dans la position d'insertion et de serrage en éloignement de l'axe longitudinal commun (22), et inversement.

5. Dispositif selon l'une des revendications 1 à 4, **caractérisé en ce que** l'ensemble de serrage (24) comprend un moyen d'entraînement pour translater ou déplacer l'ensemble de serrage (24) dans le plan commun (26) ou parallèlement à celui-ci, ou sensiblement dans le plan commun ou parallèlement à celui-ci, par rapport à la structure porteuse (18).

6. Dispositif selon l'une des revendications 1 à 5, **caractérisé en ce que** l'ensemble de serrage (24) comprend au moins un mandrin de centrage (34, 34'), en particulier déployable, télescopique, rabattable ou mobile de manière similaire, et/ou au moins un élément de butée (36) pour positionner le segment de dôme (12) dans l'ensemble de serrage (24), qui coopère avec des évidements, des découpes ou des contre-dépouilles similaires correspondants sur le segment de dôme (12).

7. Dispositif selon l'une des revendications 1 à 6, **caractérisé en ce que** l'ensemble de serrage (24) comprend au moins un élément de verrouillage (40), en particulier déployable, télescopique, rabattable ou mobile de manière similaire, en particulier un goujon ou un cylindre similaire, pour verrouiller de manière amovible, en particulier sans jeu, l'ensemble de serrage (24), en particulier l'élément de serrage (28) et le bras de serrage (32).

8. Dispositif selon l'une des revendications 1 à 7, **caractérisé en ce que** l'ensemble de serrage (24) comprend des mâchoires de serrage (44), disposées dans la zone de bordure longitudinale (46) de l'ensemble de serrage (24), et un élément de serrage tubulaire (48) qui sollicite en pression les mâchoires de serrage (44) et qui permet de serrer de façon amovible le segment de dôme (12) dans l'ensemble de serrage (24).

9. Dispositif selon l'une des revendications 1 à 8, **caractérisé en ce que** l'ensemble de serrage (24) comprend des éléments de fixation latérale (50, 50'), en particulier déployables, télescopiques, rabattables ou mobiles de manière similaire, destinés à éviter un déplacement du segment de dôme (12) dans l'ensemble de serrage (24), qui coopèrent avec des évidements, des découpes ou des contre-dépouilles similaires correspondants sur le segment de dôme (12).

10. Dispositif selon l'une des revendications 1 à 9, **caractérisé en ce que** l'ensemble de serrage (24) est réalisé de telle sorte que le segment de dôme (12) peut être partiellement sollicité en pression radialement de l'intérieur vers l'extérieur, en particulier dans la zone de bordure longitudinale (46) de l'ensemble de serrage (24).

11. Dispositif selon l'une des revendications 1 à 10, **caractérisé en ce que** l'ensemble de serrage (24) comprend un support de racine (58) qui est disposé dans la zone de bordure longitudinale (46) de l'ensemble de serrage (24).

12. Dispositif selon l'une des revendications 1 à 11, **caractérisé en ce que** l'ensemble de serrage (24) comprend un support de racine (58) par lequel le segment de dôme (12) peut être sollicité en pression radialement de l'intérieur vers l'extérieur selon un angle d'environ 15° à environ 75°, en particulier selon un angle d'environ 30° à environ 60°, de préférence selon un angle d'environ 45°, par rapport à l'axe longitudinal commun (22).

13. Dispositif selon l'une des revendications 1 à 12, **caractérisé en ce que** l'ensemble de serrage (24) comporte un élément d'actionnement de serrage (68) déplaçable radialement de l'extérieur vers l'intérieur, et inversement, et s'appuyant sur l'ensemble de serrage (24).

14. Dispositif selon l'une des revendications 1 à 13, **caractérisé en ce que** l'élément d'actionnement de serrage (68) de l'ensemble de serrage (24) est associé au support de racine (58) et, par déplacement, sollicite en pression le support de racine (58) contre le segment de dôme (12).

15. Dispositif selon l'une des revendications 1 à 14, **caractérisé en ce que** l'élément d'actionnement de serrage (68) de l'ensemble de serrage (24) est sensiblement cunéiforme, en particulier en forme de coin.

16. Dispositif selon l'une des revendications 1 à 15, **caractérisé en ce que** par déplacement, l'élément d'actionnement de serrage (68) de l'ensemble de serrage (24) sollicite en pression le support de racine (58) selon un angle d'environ 15° à environ 75°, en particulier selon un angle d'environ 30° à environ 60°, de préférence selon un angle d'environ 45°, par rapport à l'axe longitudinal commun (22) et radialement de l'extérieur vers l'intérieur, et inversement.

17. Dispositif selon l'une des revendications 1 à 16, **caractérisé en ce que** l'élément d'actionnement de serrage (68) de l'ensemble de serrage (24) peut s'appuyer radialement vers l'intérieur sur un élément de support (70) de l'ensemble de serrage (24).

18. Dispositif selon l'une des revendications 1 à 17, **caractérisé en ce que** l'ensemble de serrage (24) comprend un élément de support de racine (60) ou une tôle similaire, en particulier réalisé(e) en matériau résistant aux hautes températures, qui est associé(e) au support de racine (58).

19. Dispositif selon l'une des revendications 1 à 18, **caractérisé en ce que** l'élément de support de racine (60) ou la tôle similaire est apte à être reçu(e) par une rainure (62) ou un évidement prévu(e) dans le support de racine (58).

20. Dispositif selon l'une des revendications 1 à 19, **caractérisé en ce que** la structure porteuse (18) ou le châssis similaire et/ou l'ensemble de serrage (24) et/ou le bras de serrage (32) et/ou le ou les mandrins de centrage (34, 34') et/ou le ou les éléments de butée (36) et/ou le ou les éléments de verrouillage (40) et/ou les éléments de fixation latérale (50, 50') et/ou l'élément d'actionnement de serrage (68) et/ou les butées ou les éléments de calage similaires peuvent être actionnés par voie électromotrice, mécanique, pneumatique ou hydraulique et/ou peuvent être rabattus et/ou peuvent être translatés et/ou déplacés ou peuvent être entraînés de manière similaire et/ou peuvent être synchronisés indépendamment les uns des autres et/ou individuellement ou en étant tous coordonnés les uns avec les autres.

21. Dispositif selon l'une des revendications 1 à 20, **caractérisé en ce que** l'élément de serrage (28) et/ou le bras de serrage (32) et/ou l'élément d'actionnement de serrage (68) et/ou l'élément de support (70) est/sont pourvu(s) d'un revêtement en matière plastique, en particulier en polytétrafluoroéthylène (PTFE), en polyoxyméthylène (POM) ou en polyimide (PI), avec ou sans renfort en fibres d'aramide, de verre, de carbone, de nylon, de polyéthylène et/ou de polyester, et/ou d'une combinaison de ces matériaux.

22. Dispositif selon l'une des revendications 1 à 21, **caractérisé en ce que** la structure porteuse (18) et/ou l'élément de serrage (28) et/ou le bras de serrage (32) et/ou l'élément d'actionnement de serrage (68) et/ou l'élément de support (70) peuvent être supportés et/ou guidés par des roulements, en particulier des roulements à billes ou à rouleaux, et/ou par d'autres guidages linéaires.

23. Dispositif selon l'une des revendications 1 à 22, **caractérisé en ce qu'**à l'ensemble de serrage (24) est associé au moins un moyen (54) d'usinage et/ou d'assemblage et/ou de contrôle de matériau d'une partie au moins des segments de dôme (12).

24. Dispositif selon l'une des revendications 1 à 23, **caractérisé en ce que** ledit au moins un moyen (54) d'usinage et/ou d'assemblage et/ou de contrôle de matériau d'une partie au moins des segments de dôme (12) est réalisé sous la forme d'un moyen de fraisage (52), d'un moyen d'usinage de surface et d'enlèvement de copeaux par coupe ou meulage, tournage ou similaire, sous la forme d'un moyen de soudage (72), en particulier d'un moyen de soudage par friction-malaxage (FSW), d'un moyen de brasage ou de collage, et/ou sous la forme d'un moyen de contrôle de qualité et de matériau, en particulier d'un moyen de contrôle non destructif ou d'un moyen de contrôle NDI (Non-Destructive Inspection).

25. Utilisation d'un dispositif selon l'une des revendications précédentes pour le serrage et l'alignement de segments de dôme (12) à paroi mince, et/ou pour l'usinage, l'assemblage et/ou le contrôle de matériau, en particulier pour l'usinage de surface par fraisage, coupe ou meulage, tournage ou similaire, pour le soudage, en particulier le soudage par friction-malaxage (FSW), le brasage ou le collage, et/ou pour le contrôle non destructif ou le contrôle NDI (Non-Destructive Inspection), de segments de dôme (12) à paroi mince.

26. Utilisation du dispositif selon l'une des revendications précédentes pour la réalisation de composants (14) conçus à symétrie de révolution et/ou sans symétrie de révolution en forme de coque, en particulier en forme de demi-sphère, en forme de calotte sphérique, en forme de calotte, en forme de calotte ellipsoïdale, en forme conique, elliptique, en forme de "Cassini", en forme de demi-tore, ou présentant d'autres formes de section transversale similaires, et/ou pour la réalisation de coupoles pour des réservoirs de carburant de fusées, des réservoirs de satellites, des antennes paraboliques, des coques à réflecteur en forme de parabole, des collecteurs solaires en forme de parabole, des boîtiers de projecteurs, des fonds de récipients, des coupoles de tourelles, de calottes sous pression, ou similaires.
